# FASCICULE DE BREVET EUROPEEN

(11) **EP 2 846 931 B1**
(45) Date de publication et mention de la délivrance du brevet: **31.07.2019**
(21) Numéro de dépôt: 13721729.5
(22) Date de dépôt: 07.05.2013
(51) Int. Cl.: C10M 177/00, C10M 105/62, C10M 105/74, B82Y 40/00, B82Y 30/00, B05D 1/18, B05D 1/34, B05D 7/14

(54) **RECOUVREMENT DE SURFACES DESTINEES A L'HORLOGERIE A L'AIDE DE COMPOSITIONS CATANIONIQUES CONTENANT DES MOLECULES PHOSPHONIQUES ET DES AMINES**
ABDECKUNG VON OBERFLÄCHEN ZUR UHRENHERSTELLUNG UNTER VERWENDUNG KATIONISCHER ZUSAMMENSETZUNGEN MIT PHOSPHONISCHEN MOLEKÜLEN UND AMINEN
COVERING OF SURFACES INTENDED FOR CLOCK- AND WATCHMAKING USING CATIONIC COMPOSITIONS CONTAINING PHOSPHONIC MOLECULES AND AMINES

(30) Priorité: 10.05.2012 FR 1254300
(43) Date de publication de la demande: 18.03.2015
(73) Titulaire: Association Suisse Pour la Recherche Horlogère, 2002 Neuchâtel (CH)
(72) Inventeur: PORTET, David, 49125 Briollay (FR); LE COLLINET, Gregory, 49330 Juvardeil (FR)
(74) Mandataire: ICB SA
(86) Numéro de dépôt international: PCT/EP2013/059538
(87) Numéro de publication internationale: WO 2013/167624

(56) Documents cités:
- FR-A1- 2 848 850
- FR-A1- 2 878 248
- FR-A1- 2 904 784
- FR-A1- 2 990 433
- US-A- 4 308 079
- US-A1- 2008 160 313
- RYAN D. ROSS ET AL: "Binding affinity of surface functionalized gold nanoparticles to hydroxyapatite", JOURNAL OF BIOMEDICAL MATERIALS RESEARCH PART A, vol. 99A, no. 1, 1 octobre 2011 (2011-10-01), pages 58-66, XP055059995, ISSN: 1549-3296, DOI: 10.1002/jbm.a.33165 cité dans la demande

## Description

Se référant à la demande FR 2 990 433 déposée en France le 10 mai 2012, le demandeur a de sa propre initiative limité la portée de la demande pour la France en présentant des revendications séparées pour cet État.

### Description de l'art antérieur

Comme décrit dans le brevet FR245742, les surfaces notamment métalliques qui sont régulièrement ou occasionnellement au contact des doigts ou de contaminants, par exemple les flacons et/ou leurs bouchons, les stylos, les boucles de ceinture, les bijoux, les montres (bracelets, boitiers, verres), les verres de lunettes métallisés ou encore les composants utilisés en microtechnique et microélectronique, sont susceptibles de subir des contaminations variées. La manipulation de ces objets, les produits qu'ils contiennent ou le contact de l'air ambiant peuvent entraîner, dans certaines circonstances, le dépôt de salissures et/ou une contamination microbiologique (champignons, bactéries, virus, etc.), ce qui peut être problématique lorsque le contenu du flacon (crème, huile, parfum, médicament, etc.) est administré sur la peau ou ingurgité par l'utilisateur. Par ailleurs, la présence de ces traces disgracieuses peut être également problématique pour la commercialisation de ces objets.

Les empreintes digitales sont à l'origine de bon nombre de ces taches. Les substances responsables de ces empreintes (substances grasses ou aqueuses) peuvent soit provenir de contaminations extérieures (transfert de salissure), soit être sécrétées par la peau (par exemple par la sueur, qui est une composition mixte aqueuse et lipidique).

Les salissures (traces de doigts, contaminations, etc.) peuvent être nettoyées au moyen d'un agent nettoyant (détergents, lingettes, savons, etc.) mais une telle opération est temporaire et doit être répétée fréquemment.

Un bon moyen de lutter durablement et efficacement contre le dépôt de tels contaminants serait de traiter les surfaces de façon à les rendre antiadhésives, c'est à dire hydrophobes et lipophobes. Ce traitement permanent éviterait en effet que les composés huileux (graisses, sueur, cire, etc.) ou aqueux (eau, sueur, rosée, suspensions bactériennes, etc.) ne se déposent sur les surfaces et que les microorganismes qui y sont en suspension aient l'opportunité de s'y fixer.

En outre, il est important dans des applications micromécaniques (comme par exemple les applications horlogères) de pouvoir bénéficier de surfaces hydrophobes et oléophobes afin de favoriser la lubrification, limiter l'usure des pièces et éviter l'étalement des lubrifiants. De nombreux matériaux différents sont présents dans ces mécanismes.

Des revêtements de surface ont déjà été décrits pour limiter cette contamination et/ou le dépôt de salissure, notamment à base de composés organiques comprenant un acide carboxylique ou un acide phosphonique (WO2007/112312), ou à base d'acide organophosphoré (EP 1955638). D'autres sont décrits pour favoriser la lubrification et limiter l'étalement des huiles en horlogerie.

Cependant, ces techniques de l'art antérieur ne s'avèrent pas pleinement satisfaisantes, dans la mesure où elles ne permettent pas de traiter efficacement toutes les surfaces métalliques (notamment l'or, l'argent, et le rhodium dans le cas de l'horlogerie).

Il existe deux types de molécules capables de former des monocouches sur des surfaces en or : les molécules thiols d'une part, et les molécules aminées d'autre part. Les premières ont des forces d'adhésion sur l'or supérieures aux secondes. En effet, les molécules aminées (N) ayant pour formule générale R-NH-R' sont connues pour former des couches auto-assemblées sur des particules d'or colloïdales (Ross et al, J. Biomed Mater Res 2011 ; Aslam et al. J Mater Chem 2004) ou sur des surfaces d'or (Yoshimoto et al, Langmuir 2009) avec des énergies de liaisons assez faibles.

D'autre part, il est connu que les composés phosphoniques, en particulier les composés bisphosphoniques porteurs d'un groupement perfluoré (PF) ou perfluoropolyéther (PFPE), modifient les propriétés de mouillabilité et rendent hydrophobes et lipophobes les surfaces qu'ils recouvrent (FR 2904784 et EP 2054165). Ces composés sont capables de se fixer en monocouches auto-assemblées sur des matériaux minéraux, ou métalliques comme le fer, le titane, le cuivre, l'aluminium, le nickel, l'étain ou sur des métaux en alliage (par ex: l'acier, l'acier inoxydable, le laiton, le maillechort, le bronze, l'étain-nickel, le nickel-phosphore, le cuivre-béryllium). En revanche, ces molécules n'ont qu'une affinité très limitée pour des matériaux dans un état d'oxydation réduit ou faiblement oxydé comme certains polymères et certains métaux nobles (or, argent, rhodium...).

On connait également par le brevet FR 2 848 850 une composition comprenant de particules magnétiques acides à base de fer, complexées à un ou plusieurs composés gem-biphosphoniques. Ces particules magnétiques sont utilisées comme biovecteurs afin de cibler des molécules biologiques à leur ligand/récepteur. Les composés gem-biphosphoniques peuvent présenter à la fois un groupement biphosphonate, permettant de complexer lesdits composés à la surface de la particule magnétique, et un groupement amine, permettant de créer une liaison chimique avec un biovecteur. Ainsi, le brevet FR 2 848 850 décrit des procédés de recouvrement d'une surface utilisant des composés contenant à la fois des groupements amines et biphosphonate, qui seront fixés à ladite surface via leur groupement biphosphonate uniquement.

Dans ce contexte, les présents Inventeurs ont cherché à identifier une méthode de fonctionnalisation de surface permettant d'augmenter durablement le caractère hydrophobe et lipophobe de surfaces constituées de n'importe quel matériau, de façon :
i) à diminuer durablement et efficacement la corrosion et/ou le dépôt de salissure sur ces surfaces,
ii) à diminuer l'énergie de la surface traitée de façon à réduire l'affinité des liquides pour cette surface afin de :
   a. limiter l'étalement de liquides aqueux ou huileux,
   b. favoriser leur écoulement sur ces surfaces,
iii) à favoriser la lubrification, et/ou
iv) à limiter l'usure de pièces mécaniques.

La diminution de l'énergie de surface qu'occasionne le dépôt d'un revêtement hydrophobe et lipophobe est également recherchée dans le démoulage de pièces (polymères, composites, thermo-durcissant, thermoplastique...). Cette couche de fonctionnalisation doit donc être résistante à des températures élevées, car l'objet peut être éventuellement soumis à un traitement à haute température, et/ou à de multiples lavages.

### Légende des figures

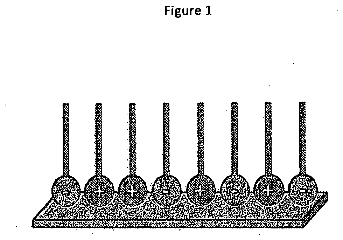

La figure 1 représente schématiquement une alternance de molécules chargées négativement et de molécules chargées positivement déposées sur une surface solide.

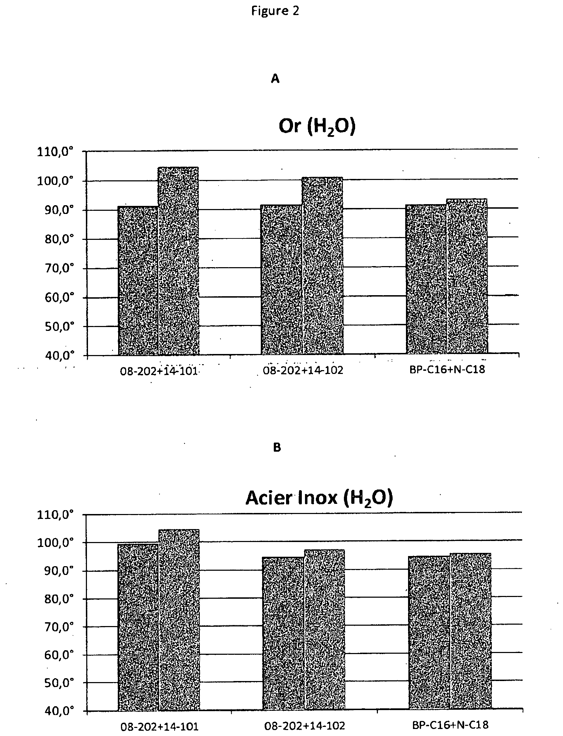

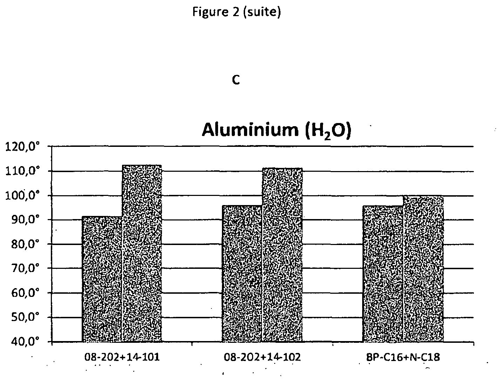

La figure 2 représente les angles de contact de gouttes d'eau posées sur des substrats (A=or, B=acier inoxydable, C=aluminium) en fonction du type de revêtement utilisé (substrat non recouvert = en gris foncé versus substrat recouvert d'une composition contenant les molécules 08-202 et 14-101, les molécules 08-202 et 14-102 ou les molécules BP-C16 et N-C18 = en gris clair).

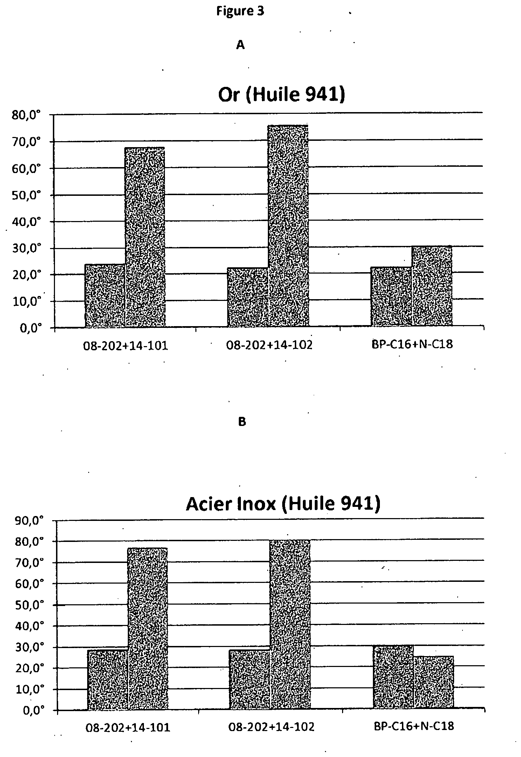

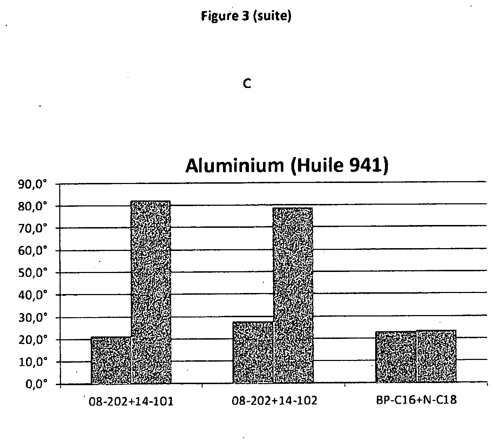

La figure 3 représente les angles de contact de gouttes d'huile Moebius 941 posées sur des substrats (A=or, B=acier inoxydable, C=aluminium) en fonction du type de revêtement utilisé (substrat non recouvert = en gris foncé versus substrat recouvert d'une composition contenant les molécules 08-202 et 14-101, les molécules 08-202 et 14-102 ou les molécules BP-C16 et N-C18 = en gris clair).

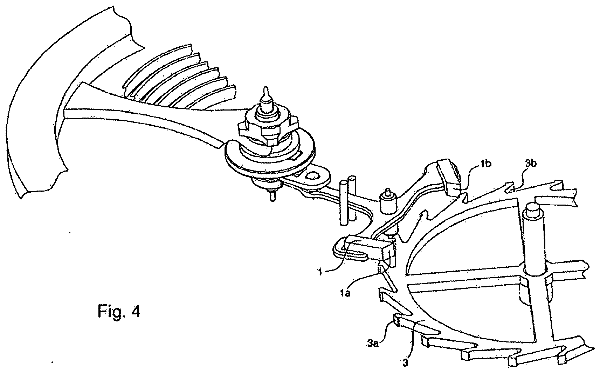

La figure 4 représente un échappement à ancre suisse dans lequel des contacts successifs sont établis entre les palettes de l'ancre (1) et les dents de la roue d'échappement (3). Les frottements doivent être minimisés sur la palette d'entrée (1a) et sur la palette de sortie (1b), une lubrification optimale devant être assurée tout au long du contact le long du plan de repos (3b) et du plan d'impulsion (3a) de la dent.

### Description détaillée de l'invention

Dans ce contexte, les Inventeurs ont découvert que des molécules aminées et des molécules phosphoniques forment des paires d'ions capables de se fixer et/ou de s'auto-assembler durablement sur tout type de surfaces, qu'elles soient composées de métal, de minéral ou de polymère. Sous forme amine (N) et acide phosphonique (P) ou ammonium (N⁺) et phosphonate (P⁻), ces molécules s'organisent alternativement, associant une ou plusieurs charge(s) positive(s) (N⁺) à proximité d'une ou plusieurs charge(s) négative(s) (P⁻). Ces molécules ayant par ailleurs la possibilité de s'auto-assembler et de s'auto-organiser, le résultat obtenu est une monocouche auto-assemblée telle que représentée dans la figure 1. Les surfaces traitées par un mélange de ces deux types de molécules sont durablement fonctionnalisées. Le mélange peut être formé en solution avant le dépôt ou directement sur la surface à traiter par dépôt successif des deux composés.

De façon surprenante, il est possible de recouvrir efficacement avec un tel mélange des surfaces sur lesquelles ni les molécules amines, ni les molécules phosphoniques, ne peuvent se fixer durablement lorsqu'elles sont seules (cf. exemple 2). Il est probable que l'organisation chimique des deux molécules, telle que représentée sur la figure 1, soit à l'origine de cette propriété surprenante, car l'interaction entre les deux molécules serait telle qu'elle suppléerait une faible affinité avec la surface à recouvrir L'invention permet donc avantageusement de fonctionnaliser n'importe quel type de surface, plus rapidement et de façon plus résistante que les solutions déjà connues dans l'art antérieur.

Des compositions catanioniques ont déjà été décrites pour diminuer la tension de surface à l'interface liquide-gaz (cf. notamment US 7,097,705), mais aucune n'a été décrite pour modifier les propriétés des surfaces solides. Les présents Inventeurs ont découvert que l'association de i) deux groupements chimiques capables de former des paires d'ions catanioniques et également capables d'interagir avec des surfaces, avec ii) des groupements chimiques permettant une auto-organisation ainsi qu'une cohésion latérale (une fois auto-assemblés) permet de recouvrir durablement tout type de matériaux solides par des couches auto-assemblées catanioniques.

Ainsi, une composition comprenant des composés amines en mélange avec des composés phosphoniques ou l'application séquentielle de deux compositions contenant chacune l'un de ces deux composés permet de recouvrir un grand nombre de surfaces minérales et métalliques, parmi lesquelles l'or, l'argent, le fer, le rhodium, le titane, le cuivre, l'aluminium, le nickel, l'étain, ou des métaux en alliage comme l'acier, l'acier inoxydable, le laiton, le maillechort, le bronze, l'étain-nickel, le nickel-phosphore, le cuivre-béryllium, ou encore des céramiques, des polymères ou du verre, et de diminuer très efficacement et durablement la corrosion sur ces surfaces, ainsi que le dépôt de salissure et la contamination microbiologique de celles-ci.

Lorsque les composés amines ou phosphoniques portent des groupements perfluoropolyéther (PFPE), les monocouches formées par une telle composition / application confèrent un caractère hydrophobe et oléophobe à ces surfaces, ce qui limite l'attachement et favorise l'écoulement de gouttelettes d'eau, de sueur, d'encre et/ou de matières grasses et donc la mise en contact prolongée des microorganismes qu'elles contiennent. Un tel recouvrement permet également de réduire l'énergie superficielle de ces surfaces et confère des propriétés antiadhésives et/ou lubrifiantes à ces surfaces.

En particulier, les couches formées peuvent être déposées dans une zone déterminée d'une surface pour confiner un lubrifiant dans ladite zone, ladite surface étant destinée à être utilisée dans un mécanisme horloger ou dans un dispositif intégré dans un produit horloger.

Dans un premier aspect, l'invention concerne donc une composition comprenant au moins un composé amine et au moins un composé phosphonique ou un de leurs sels toxicologiquement acceptables.

Par « composé amine », on entend ici un composé organique dérivé de l'ammoniac dont certains hydrogènes ont été remplacés par un groupement carboné. On parle d'amine primaire, secondaire ou tertiaire selon que l'on a un, deux ou trois hydrogènes substitués. L'alkylation supplémentaire de ces composés permet également d'inclure à la définition les sels d'ammonium. Les amines sont généralement obtenues par alkylation d'amines de rang inférieur. En alkylant l'ammoniac, on obtient des amines primaires, qui peuvent être alkylées en amines secondaires puis amines tertiaires. L'alkylation de ces dernières permet d'obtenir des sels d'ammonium quaternaire. D'autres méthodes existent, toutes aussi classiques, et qui sont bien connues de l'homme du métier. L'une d'elles est présentée dans l'exemple 1 ci-dessous.

Par « composé phosphonique », « molécule phosphonique » ou « acide phosphonique », ou « phosphonate » on entend ici un composé contenant au moins un groupement PO₃ sous sa forme phosphonate PO₃⁻ ou sous sa forme acide phosphonique PO₃H. De tels composés sont décrits notamment dans EP 2 054 165.

Les « sels toxicologiquement acceptables » visés dans la présente invention sont notamment les sels de sodium ou de potassium, les sels de calcium ou de magnésium, ou les sels formés par des ligands organiques appropriés tels que des sels d'ammonium. Les sels sont donc de préférence choisis parmi les sels de sodium, de potassium, de magnésium, de calcium, et d'ammonium.

Dans les formules décrites dans la présente demande, la lettre « S » désigne l'atome de soufre, la lettre « O » l'atome d'oxygène, la lettre « N » l'atome d'azote, la lettre « F » l'atome de fluor, la lettre « H » l'atome d'hydrogène, la lettre « C » l'atome de carbone, et la lettre « P » l'atome de phosphore, selon la nomenclature classiquement utilisée (en règle générale, tous les groupements et atomes utiles dans les composés ici décrits s'entendent selon leur interprétation usuelle dans l'art).

Par groupement « alkyle en C₀-C₁₀₀», on entend, au sens de la présente invention, une chaîne hydrocarbonée divalente de préférence saturée, linéaire ou ramifiée, comportant 0 à 100, de préférence 0 à 30, et, de manière encore plus préférée 0 à 20 atomes de carbone. A titre d'exemple, on peut citer les groupes méthylène, éthylène, propylène, isopropylène, butylène, isobutylène, sec-butylène, pentylène ou encore hexylène. Un alkyle linéaire est par exemple un groupe méthyle, éthyle, propyle, butyle, pentyle, hexyle, etc.

Par « perfluoré » on entend désigner un groupement alkyle, cycloakyle, aryle substituée où les atomes d'hydrogène ont été substitués par des atomes de fluor, par exemple CₙF₂ₙ, n étant de préférence compris entre 0 et 50, de manière encore plus préférée compris entre 0 et 10.

Par « partiellement fluoré », on entend désigner une molécule dont un ou plusieurs atomes d'hydrogène est (sont) substitué(s) par des atomes de fluor.

Par groupement « cycloalkyle », on entend, au sens de la présente invention, une chaîne hydrocarbonée saturée cyclique, comportant de préférence entre 3 à 7 atomes de carbone cycliques. A titre d'exemple, on peut citer les groupes cyclopropyle, cyclobutyle, cyclopentyle, cyclohexyle et cycloheptyle.

Par « aryle », on entend, au sens de la présente invention, un groupement aromatique, comportant de préférence de 6 à 10 atomes de carbone, et comprenant un ou plusieurs cycles accolés, comme par exemple un groupement phényle ou naphtyle. Avantageusement, il s'agit du phényle.

Selon un mode de réalisation préféré de l'invention, les composés phosphoniques et amines sont porteurs de groupements fluorés qui confèrent un comportement oléophobe et hydrophobe aux matériaux traités. Cette fonctionnalité permet de favoriser les écoulements, de limiter les forces d'adhésion, de prévenir la corrosion, de lubrifier, de limiter le dépôt de salissure, le fouling et/ou la contamination microbiologique sur ces matériaux. Ce traitement confère par ailleurs une bonne résistance mécanique, ainsi qu'une résistance au vieillissement et aux produits de nettoyage.

Les composés phosphoniques présents dans la composition de l'invention sont préférentiellement porteurs d'un groupement perfluoré (PF) ou perfluoropolyéther (PFPE). De manière encore plus préférée, il s'agit de composés bisphosphoniques, tels que ceux décrits dans les demandes de brevet N° FR2904784 et EP 2 054 165.

Plus précisément, ledit composé amine peut être une amine-perfluorée ou une amine-perfluoropolyéther de formule **I'-N** suivante : 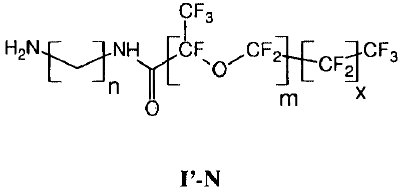 dans laquelle n est un entier compris entre **1** et 100, m est un entier compris entre 0 et 100, et x est un entier compris entre 0 et 10,
et ledit composé phosphonique peut être un acide bisphosphonique perfluoré ou porteur d'au moins un groupe perfluoropolyéther, de formule **I'-P** suivante :
et
C est choisi parmi : un atome d'hydrogène, (CF(CF₃)CF-₂O)ₙ(CF₂)₂CF₃, (CF₂CF(CF₃)O)ₙ(CF₂)₂CF₃, (CF₂CF₂CFO)ₙ (CF₂)₂CF₃, (CF₂CF₂O)ₙ(CF₂)CF₃ et C_{P}F₂ₚ₊₁-, dans lesquels n et p sont des entiers compris entre 1 et 100, de préférence entre 1 et 50.

Dans les formules décrites dans la présente demande, la lettre « S » désigne l'atome de soufre, la lettre « O » l'atome d'oxygène, la lettre « N » l'atome d'azote, la lettre « F » l'atome de fluor, la lettre « H » l'atome d'hydrogène, la lettre « C » l'atome de carbone, et la lettre « P » l'atome de phosphore, selon la nomenclature classiquement utilisée (en règle générale, tous les groupements et atomes utiles dans les composés ici décrits s'entendent selon leur interprétation usuelle dans l'art).

Par groupement « alkyle en C₀-C₁₀₀», on entend, au sens de la présente invention, une chaîne hydrocarbonée divalente de préférence saturée, linéaire ou ramifiée, comportant 0 à 100, de préférence 0 à 30, et, de manière encore plus préférée 0 à 20 atomes de carbone. A titre d'exemple, on peut citer les groupes méthylène, éthylène, propylène, isopropylène, butylène, isobutylène, sec-butylène, pentylène ou encore hexylène. Un alkyle linéaire est par exemple un groupe méthyle, éthyle, propyle, butyle, pentyle, hexyle, etc.

Par « perfluoré » on entend désigner un groupement alkyle, cycloakyle, aryle substituée où les atomes d'hydrogène ont été substitués par des atomes de fluor, par exemple CₙF₂ₙ, n étant de préférence compris entre 0 et 50, de manière encore plus préférée compris entre 0 et 10.

Par « partiellement fluoré », on entend désigner une molécule dont un ou plusieurs atomes d'hydrogène est (sont) substitué(s) par des atomes de fluor.

Par groupement « cycloalkyle », on entend, au sens de la présente invention, une chaîne hydrocarbonée saturée cyclique, comportant de préférence entre 3 à 7 atomes de carbone cycliques. A titre d'exemple, on peut citer les groupes cyclopropyle, cyclobutyle, cyclopentyle, cyclohexyle et cycloheptyle.

Par « aryle », on entend, au sens de la présente invention, un groupement aromatique, comportant de préférence de 6 à 10 atomes de carbone, et comprenant un ou plusieurs cycles accolés, comme par exemple un groupement phényle ou naphtyle. Avantageusement, il s'agit du phényle.

Selon un mode de réalisation préféré de l'invention, les composés phosphoniques et amines sont porteurs de groupements fluorés qui confèrent un comportement oléophobe et hydrophobe aux matériaux traités. Cette fonctionnalité permet de favoriser les écoulements, de limiter les forces d'adhésion, de prévenir la corrosion, de lubrifier, de limiter le dépôt de salissure, le fouling et/ou la contamination microbiologique sur ces matériaux. Ce traitement confère par ailleurs une bonne résistance mécanique, ainsi qu'une résistance au vieillissement et aux produits de nettoyage.

Dans ce mode de réalisation préféré, les composés phosphoniques présents dans la composition de l'invention sont préférentiellement porteurs d'un groupement perfluoré (PF) ou perfluoropolyéther (PFPE). De manière encore plus préférée, il s'agit de composés bisphosphoniques, tels que ceux décrits dans les demandes de brevet N° FR2904784 et EP 2 054 165.

Plus précisément, ledit composé amine peut être une amine-perfluorée ou une amine-perfluoropolyéther de formule **I'-N** suivante : 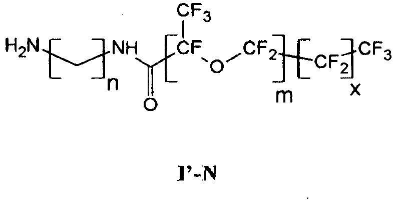 dans laquelle n est un entier compris entre 1 et 100, m est un entier compris entre 0 et 100, et x est un entier compris entre 0 et 10,
et ledit composé phosphonique peut être un acide bisphosphonique perfluoré ou porteur d'au moins un groupe perfluoropolyéther, de formule **I'-P** suivante : 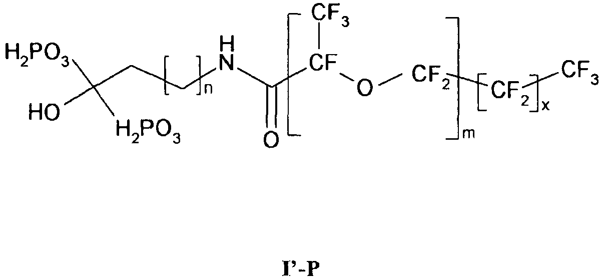 dans laquelle n est un entier compris entre 1 et 100, m est un entier compris entre 0 et 100, et x est un entier compris entre 0 et 10.
De manière préférée, dans les formules I'-N et I'-P, n est un entier compris entre 1 et 30, m est un entier compris entre 1 et 50, et x est un entier compris entre 1 et 10.
De manière encore plus préférée, dans les formules I'-N et I'-P, n est un entier compris entre 1 et 20, m est un entier compris entre 1 et 30, et x est un entier compris entre 1 et 10.
De manière préférée entre toutes, ledit composé amine-perfluorée est un composé de formule I'-N dans laquelle n=6, m=4, et x=1, ou n=2, m=4, et x=1, ou n=6, m=5, et x=1, ou n=2, m=5, et x=1, et ledit composé phosphonique perfluoré est un composé de formule I'-P dans laquelle n=4, m=4, et x=1, ou encore n=4, m=5, et x=1.

Par ailleurs, la composition de l'invention peut contenir avantageusement un composé amine qui est une alkyle amine linéaire de formule **I"-N** suivante : 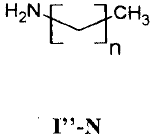 dans laquelle n est un entier compris entre 1 et 100, de préférence entre 5 et 30, et de façon encore plus préférentielle entre 8 et 20.
La composition de l'invention peut également contenir avantageusement un composé phosphonique de formules **I"-P** ou **I"'-P** suivantes : 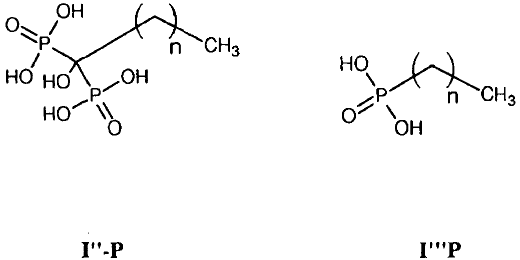 dans lesquelles n est un entier compris entre 1 et 100, de préférence entre 5 et 30 et, de façon encore plus préférentielle, entre 8 et 20.

Les compositions contenant un composé de formule (I'-N) ou (I"-N) et (I'-P), (I"-P) ou (I"'-P) peuvent être utilisées avantageusement pour diminuer l'énergie superficielle des surfaces traitées. Comme décrit dans les demandes FR 2904784 et EP 2054165, l'utilisation de couches de faible énergie superficielle est largement répandue dans le domaine de la lubrification de pièces mécaniques. Cette notion de lubrification recouvre en réalité de très nombreux phénomènes physiques, de type collage des surfaces (dues aux aspérités de surface mais également énergies superficielles des matériaux en jeu), glissement sur des couches superficielles, ou « surfing » sur le liquide plus ou moins visqueux (lubrification « hydrodynamique »). Dans le cadre de la lubrification de pièces métalliques, il est souhaitable de disposer de couches très fortement fixées qui conduisent à des surfaces de faible énergie superficielle. Par conséquent, l'utilisation d'un mélange de molécules aminés et phosphoniques présentant à la fois une liaison forte avec le matériau support et un groupement perfluoré ou perfluoropolyéther permet une lubrification sèche de ces matériaux.

Les compositions de l'invention contenant les composés aminés et phosphoniques, de préférence de formule (I'-N) ou (I"-N) et (I'-P), (I"-P) ou (I"'-P), ou un de leurs sels, permettent notamment de limiter la corrosion des surfaces qu'elles recouvrent, de diminuer le dépôt de salissure et/ou la contamination microbiologique de celles-ci.

La présente invention décrit donc des compositions comprenant une quantité efficace des composés aminés et phosphoniques, de préférence de formule (I'-N), ou (I"-N) et (I'-P), (I"-P) ou (I"'-P), ou leurs sels toxicologiquement acceptables, capables de se fixer durablement sur des surfaces minérales ou métalliques destinées au flaconnage ou au recouvrement de tout objet potentiellement au contact des doigts, de l'air ou d'un liquide quelconque, et aptes à en augmenter l'oléophobicité, et/ou l'hydrophobicité et donc aptes à limiter le dépôt de moisissures, de salissures, et donc la contamination microbiologique sur ces surfaces. Ces compositions sont également aptes à diminuer la corrosion de ces surfaces. Plus particulièrement, la composition de l'invention permet d'obtenir un angle de contact entre une huile et la surface recouverte d'au moins 45°, préférentiellement 60°, et un angle entre l'eau et la surface recouverte d'au moins 90°.

Par le terme « quantité efficace », on entend que la quantité de composé appliquée permet, après recouvrement, de former un film mince permettant d'obtenir les angles ci-dessus mentionnés.

Les compositions de l'invention peuvent être liquides, gazeuses ou supercritiques. Elles sont de préférence liquides. Dans ce cas, les compositions de l'invention peuvent être des compositions aqueuses et/ou organiques.

Le solvant de la composition liquide de l'invention est choisi de manière à permettre la solubilisation des deux types de composés présents dans la composition. Ce solvant pourra être choisi notamment parmi l'eau, ou encore les solvants alcooliques, en particulier des alcools en C₁ à C₆, tels que le méthanol, l'éthanol, l'isopropanol (IPA), des aldéhydes, des cétones tels que l'acétone, des éthers tels que le diéthyléther ou le tétrahydrofurane ou des alcanes, notamment des alcanes en C₁ à C₈, ainsi que leurs mélanges, ou encore dans un solvant composé de napthas hydrotraités en mélange par exemple avec de l'IPA ou de l'acétone. Les mélanges peuvent également être composés d'un ou plusieurs des solvants précédemment cités et d'eau (H₂O). De préférence, le solvant de la composition de l'invention est l'eau en mélange avec l'IPA ou l''lPA seul. Il est possible d'utiliser des solvants eau/IPA dans n'importe quelle proportion, par exemple 50% d'eau et 50% d'IPA, ou 90% d'eau et 10% d'IPA.

La composition de l'invention peut également être gazeuse, les composés phosphoniques et amines pouvant être notamment à l'état de vapeur.

Par « composition supercritique », on entend une composition qui se trouve dans un état de fluide supercritique. De nombreux fluides supercritiques sont connus. Le CO₂ est ici préféré.

La composition de l'invention se présente avantageusement sous forme d'une solution, suspension, émulsion, d'un fluide supercritique, d'un aérosol, d'un gel ou d'une mousse.

La teneur en composés phosphoniques dans la composition liquide de l'invention est avantageusement comprise entre 0,0001 et 20 % en poids, de préférence entre 0,001 et 5 % en poids de la composition totale, et la teneur en composés amines dans la composition liquide de l'invention est avantageusement comprise entre 0,0001 et 20 % en poids, de préférence entre 0,001 et 5 % en poids de la composition totale.

Selon un mode de réalisation, les composés N et P sont intégrés dans la composition de l'invention à une concentration molaire comprise entre 10⁻¹ et 10⁻¹⁵ mol/L de chaque composé, de préférence comprise entre 10⁻² et 10⁻⁵ mol/L.

De préférence, les deux composés sont présents dans la composition de l'invention en quantités égales (soit 50%-50% au sein de la composition), bien qu'il soit possible également d'utiliser des proportions différentes (25%-75% de l'un ou de l'autre).

La présente invention vise également l'utilisation de ces compositions pour augmenter l'hydrophobicité et l'oléophobicité d'une surface, l'utilisation de ces compositions pour limiter la corrosion d'une surface, et l'utilisation de ces compositions pour limiter le dépôt de salissure et/ou la contamination microbiologique sur une surface. De préférence, ladite surface est en matière métallique, minérale ou organique. Elle peut être notamment en verre ou en polymère.

Dans un autre aspect, ces compositions peuvent également être utilisées pour diminuer l'énergie superficielle des surfaces traitées et donc pour lubrifier des pièces métalliques en diminuant leur coefficient de friction et en limitant leur usure mécanique.

Les surfaces traitées par les compositions de l'invention peuvent être destinées à être utilisées dans le domaine de l'horlogerie par exemple dans des pièces ou dispositifs utilisés dans des montres, des réveils ou des horloges.

Dans un deuxième aspect, la présente invention vise un procédé de recouvrement d'une surface par une couche moléculaire de fonctionnalisation, caractérisé en ce qu'il comprend au moins les étapes suivantes :
a) Éventuellement, préparation de ladite surface par un lavage dans un solvant puis séchage,
b) Mise en contact de ladite surface avec une composition contenant des composés phosphoniques,
c) Mise en contact de ladite surface avec une composition contenant des composés aminés,
d) Elimination du surnageant,
e) Rinçage de la surface fonctionnalisée,
f) Séchage de la surface fonctionnalisée,
Plus précisément, le procédé de recouvrement de l'invention comprend au moins les étapes suivantes :
a) Éventuellement, préparation de ladite surface par un lavage dans un solvant puis séchage,
b) Mise en contact de ladite surface avec une composition contenant une quantité efficace de composés phosphoniques, jusqu'à auto-assemblage desdits composés phosphoniques en une couche fine sur ladite surface,
c) Mise en contact de ladite surface avec une composition contenant une quantité efficace de composés aminés, jusqu'à auto-assemblage desdits composés amines en une couche fine sur ladite surface
d) Élimination du surnageant,
e) Rinçage de la surface fonctionnalisée,
f) Séchage de la surface fonctionnalisée.

Les composés amines utilisables dans le procédé de l'invention sont ceux précédemment décrits, notamment les composés de formule I'-N, et I"-N.

Les composés phosphoniques utilisables dans le procédé de l'invention sont ceux précédemment décrits, notamment les composés de formule I'-P, I"-P et I"'-P.

De préférence, lesdits composés aminés et lesdits composés phosphoniques sont des composés différents. En d'autres termes, les composés utilisés dans les étapes b) et c) ne sont pas identiques, bien qu'il soit possible que des composés phosphoniques contiennent un groupement amine, et vice versa.

De préférence, les composés amines et les composés phosphoniques de l'invention recouvrent directement la surface après que le procédé de l'invention a été mis en oeuvre. Par « recouvrent directement », il est entendu que ces composés sont complexés avec la surface - ou fixés à la surface - sans aucun intermédiaire. Les deux types de composés sont donc directement en contact avec la surface à recouvrir (cf. figure 1).

De préférence, ladite surface est une surface constituée à plus de 50 %, de préférence à plus de 75%, de manière encore plus préférée de 85%, voire même à plus de 95%:
- de métaux et oxydes choisis parmi l'or (Au), le platine (Pt), le palladium (Pd), l'argent (Ag), le rhodium (Rh), le cuivre (Cu), le fer (Fe), le titane (Ti), l'aluminium (Al), le chrome (Cr), le tantale (Ta), les alumines, les zircones, le rubis (alliage d'oxyde d'aluminium et de chrome, n°CAS 12174-49-1), le saphir (oxyde d'aluminium, n° CAS 1317-82-4), le nickel (Ni), le ruthénium (Ru), et l'étain (Sn),
- d'alliages et d'oxydes choisis parmi les aciers (alliage de fer et de carbone), acier inoxydable, laiton (alliage de cuivre et de zinc), maillechort (alliage de cuivre, de nickel, et de zinc), bronze (alliage de cuivre et d'étain), étain-nickel (Sn-Ni), nickel-phosphore (Ni-P), cuivre-béryllium (Cu-Be), palladium-nickel (Pd-Ni), cuivre-cobalt (Cu-Co), ou d'alliages comprenant du vanadium (V), du chrome (Cr), du manganèse (Mn), du zinc (Zn), du tungstène (W), ou du zirconium (Zr), ou d'un alliage amorphe, ou de céramiques, comme par exemple les oxydes de zirconium (ZrOx) de Titane (TiOx) ou de tantale (TaxOy).

Dans un mode de réalisation préféré, ladite surface est constituée à plus de 50%, de préférence à plus de 75% et de manière encore plus préférée à plus de 85%, voire même à plus de 95% d'or, d'acier, d'inox, de titane, de nickel, de verre, de rhodium ou d'aluminium.

Dans un mode de réalisation, cette surface est magnétique. C'est notamment le cas des surfaces faites d'un matériau contenant du fer. Cependant, dans un autre mode de réalisation, la surface n'est pas magnétique. C'est notamment le cas des surfaces faites d'un matériau comme la céramique ou le verre, ou encore d'alliages métalliques amagnétiques. Dans un mode de réalisation particulier, la surface n'est pas une particule magnétique. Notamment, la surface n'est de préférence pas une particule magnétique constituée en tout ou partie par un dérivé du fer, notamment du fer (III), comme un oxyde ou un hydroxyde de fer. La surface n'est de préférence pas une particule magnétique avec un diamètre hydrodynamique compris entre 5 et 200 nm. La surface n'est notamment de préférence pas une particule magnétique constituée en tout ou partie par un dérivé du fer (notamment du fer (III), comme un oxyde ou un hydroxyde de fer) avec un diamètre hydrodynamique compris entre 5 et 200 nm.

Au sens de la présente invention, un alliage est dit « amorphe » lorsque les atomes ne respectent aucun ordre à moyenne et grande distance (à l'inverse des composés cristallisés). Les verres sont des composés amorphes.

Au sens de la présente invention, les « céramiques » sont de structure cristalline ou partiellement cristalline, ou en verre, et formées de substances essentiellement inorganiques et non métalliques, par une masse en fusion qui se solidifie en se refroidissant, ou qui est formé et porté à maturité, en même temps ou ultérieurement, par l'action de la chaleur. Il peut s'agir de céramiques d'oxydes (oxydes d'aluminium, de zirconium), de céramiques non-oxydes (carbures, borures, nitrures, céramiques composées de silicium et d'atomes tels que tungstène, magnésium, platine, ou encore titane) ; ou enfin de céramiques composites (combinaison des oxydes et des non-oxydes, comme le rubis).

Dans le cadre de la présente invention, on entend par « couche moléculaire de fonctionnalisation », une couche composée de molécules qui sont chacune ancrée au substrat par l'une au moins de leurs terminaisons et disposées les unes à côtés des autres de façon organisée. Les molécules sont ancrées au substrat de préférence par leurs terminaisons amine ou phosphonique. Leur organisation en surface et les différents groupements chimiques qu'elles présentent permettent de modifier les propriétés chimiques ou physiques des surfaces ainsi recouvertes. L'épaisseur de la couche moléculaire obtenue selon le procédé objet de la présente invention est avantageusement de l'ordre du nanomètre, c'est-à-dire comprise entre 0,1 nm et 50 nm.

La première étape de dégraissage de la surface est optionnelle, elle dépend de la nature et de l'aspect de la surface qu'il faut recouvrir. Cette étape de dégraissage peut se faire selon toute méthode classiquement utilisée, par exemple en lavant la surface avec un détergeant approprié. La surface est ensuite avantageusement séchée pour ôter toute trace du détergeant utilisé.

Dans le procédé objet de la présente invention, la surface à fonctionnaliser est mise en contact avec une composition contenant des composés phosphoniques et une composition contenant des composés amines, jusqu'à auto-assemblage desdits composés en une couche recouvrant ladite surface (étapes b et c).

Dans ce procédé, il n'est pas nécessaire de réaliser les étapes b) et c) dans cet ordre, mais ce mode de réalisation est néanmoins préféré. Dans ce mode de réalisation préféré, la surface sera mise en contact d'abord avec les acides phosphoniques, puis avec l'amine. Dans un autre procédé préférentiel, le recouvrement pourra être réalisé avec les deux types de composés en même temps. Dans ce dernier cas, la composition de recouvrement utilisée est par exemple la composition selon l'invention décrite plus haut. Dans ce mode de réalisation préféré, les deux types de composés sont contenus dans une même composition et les étapes b) et c) sont alors confondues.

Sans vouloir s'y limiter, le temps de mise en contact de la ou des compositions contenant les deux composés avec la surface à recouvrir est typiquement de 5 secondes à 24 heures, de façon préférée de 30 secondes à 1 heure, et de façon encore plus préférée de 1 minute à 20 minutes environ.

Le solvant des compositions contenant les composés N et/ou P est choisi de manière à en permettre la solubilisation. Ce solvant pourra être choisi notamment parmi l'eau ou des solvants alcooliques, en particulier des alcools en C₁ à C₆, tels que le méthanol, l'éthanol, l'isopropanol (IPA), des aldéhydes, des cétones tels que l'acétone, des éthers tels que le diéthyléther ou le tétrahydrofurane ou des alcanes, notamment des alcanes en C₁ à C₈, ainsi que leurs mélanges, ou encore dans un solvant composé de naphtas hydrotraités en mélange par exemple avec de l'IPA ou de l'acétone. Les mélanges peuvent également être composés d'un ou plusieurs des solvants précédemment cités et d'eau (H₂O).

De préférence, le solvant de la composition contenant l'acide phosphonique est l'IPA.

De préférence, le solvant de la composition contenant l'amine est une solution aqueuse mélangée avec de l'IPA ou l'IPA seul.

Pour rappel, le solvant de la composition de l'invention (contenant à la fois le composé amine et le composé phosphonique) est de préférence l'eau en mélange avec de l'IPA, par exemple 90% d'eau mélangé à 10% d'IPA.

Par « quantité efficace » on entend ici que la teneur en composés phosphoniques est comprise entre 0,0001 et 20 % en poids, de préférence entre 0,001 et 5 % en poids par rapport au poids total de la composition les contenant, et la teneur en composés amines est comprise entre 0,0001 et 20 % en poids, de préférence entre 0,001 et 5 % en poids par rapport au poids total de la composition les contenant.

Selon un mode de réalisation préféré, les composés amines ou phosphoniques sont intégrés dans les compositions les contenant à une concentration molaire comprise entre 10⁻¹ et 10⁻¹⁵ mol/L, de préférence comprise entre 10⁻² et 10⁻¹⁰ mol/L.

De préférence, si les deux composés N et P sont mélangés dans une unique composition, ils sont en quantités égales (soit 50%-50% au sein de la composition), bien qu'il soit possible également d'utiliser des proportions différentes (25%-75% de l'un ou de l'autre).

Lorsque les compositions contenant les composés amines et phosphoniques sont liquides, leur mise en contact avec la surface à recouvrir peut être réalisée, par exemple, par trempage, par spin-coating, par essuyage, par vaporisation, par aérosol ou par pulvérisation. Lorsque ces compositions sont gazeuses ou supercritiques, leur mise en contact avec la surface à recouvrir peut être réalisée à l'aide d'un réacteur dont la pression et la température sont contrôlables et qui permet l'injection d'un gaz tel que le CO₂.

Après l'étape de mise en contact de la surface avec la ou les compositions de recouvrement, on procède à l'élimination de celle(s)-ci (étape e), de façon à éliminer de la surface le solvant et tous les solutés amines et phosphoniques qui ne se sont pas fortement fixés au substrat lors de la mise en contact. Cette élimination des composés de recouvrement peut être réalisée, par exemple, par rinçage, ou mécaniquement par égouttage, centrifugation ou évaporation. La surface peut être en outre rincée notamment par immersion dans un solvant approprié, afin d'assurer une élimination complète du soluté non fixé. Ledit solvant approprié est de préférence celui utilisé pour préparer la solution ou de l'eau.

La surface peut être séchée (étape f) sous flux d'air chaud, par exemple à 70°C pendant 2 minutes.

Les étapes b) à f) du procédé de recouvrement de l'invention peuvent être itérées, avec l'une, l'autre ou les deux composés (P et N) ce qui peut améliorer l'efficacité de recouvrement.

La présente invention vise également, dans un troisième aspect, les surfaces fonctionnalisées au moyen du procédé de recouvrement de l'invention. Ces surfaces peuvent être tout type de surface, et notamment des surfaces constituées à plus de 50 %, de préférence à plus de 75%, de manière encore plus préférée à plus de 85%, voire même à plus de 95% :
- de métaux et oxydes choisis parmi l'or (Au), le platine (Pt), le palladium (Pd), l'argent (Ag), le rhodium (Rh), le cuivre (Cu), le fer (Fe), le titane (Ti), l'aluminium (Al), le chrome (Cr), le tantale (Ta), les alumines, les zircones, le rubis (alliage d'oxyde d'aluminium et de chrome, n°CAS 12174-49-1), le saphir (oxyde d'aluminium, n° CAS 1317-82-4), le nickel (Ni), le ruthénium (Ru), et l'étain (Sn),
- d'alliages et d'oxydes choisis parmi les aciers (alliage de fer et de carbone), acier inoxydable, laiton (alliage de cuivre et de zinc), maillechort (alliage de cuivre, de nickel, et de zinc), bronze (alliage de cuivre et d'étain), étain-nickel (Sn-Ni), nickel-phosphore (Ni-P), cuivre-béryllium (Cu-Be), palladium-nickel (Pd-Ni), cuivre-cobalt (Cu-Co), ou d'alliages comprenant du vanadium (V), du chrome (Cr), du manganèse (Mn), du zinc (Zn), du tungstène (W), ou du zirconium (Zr), ou d'un alliage amorphe, ou de céramiques, comme par exemple les oxydes de zirconium (ZrOx) de Titane (TiOx) ou de tantale (TaxOy).

Dans un mode de réalisation préféré, ladite surface fonctionnalisée est constituée à plus de 50 %, de préférence à plus de 75%, de manière encore plus préférée à plus de 85%, voire même à plus de 95% : d'or, d'acier, d'inox, de titane, de nickel, le verre, de rhodium, ou d'aluminium.

La composition et le procédé de la présente invention sont utilisés de préférence dans le domaine de l'épilamage des pièces horlogères ou des mécanismes horlogers.

Par « épilamage », en entend ici tout moyen ayant pour but d'empêcher l'étalement d'un lubrifiant sur une surface d'une pièce micromécanique.

Par « mécanisme horloger », on entend ici par exemple un échappement, un balancier spiral, un sautoir, un poussoir, un rouage, un pignon, un barillet, une tige de mise à l'heure... d'un mouvement horloger, cette liste n'ayant bien entendu aucun caractère limitatif.

Par « pièces d'horlogerie », on entend ici par exemple un mouvement horloger en tant que tel ou intégré dans un produit horloger, typiquement une montre bracelet, une horloge, une pendule.

Par « dispositif intégré dans un produit horloger », on entend ici un échappement, un balancier spiral, un sautoir, un poussoir, un rouage, un pignon, un barillet, une tige de mise à l'heure... d'un mouvement horloger, cette liste n'ayant bien entendu aucun caractère limitatif.

Ainsi, dans un mode de réalisation particulier, les surfaces recouvertes par le procédé de l'invention sont utilisées dans des pièces utilisées dans les mécanismes horlogers ou dans des dispositifs intégrés dans des produits horlogers.

Ainsi, dans un quatrième aspect, la présente invention vise l'utilisation d'une surface fonctionnalisée au moyen du procédé défini précédemment pour la fabrication de mécanismes horlogers ou de pièces d'horlogerie.

Dans un cinquième aspect, la présente invention vise l'utilisation de la composition de l'invention ou du procédé de recouvrement de l'invention pour augmenter l'hydrophobicité et/ou la lipophobicité d'une surface, et limiter le colmatage de canaux de petite taille sur des surfaces utilisées en horlogerie, dans des pièces d'horlogerie ou dans des mécanismes horlogers.

En particulier, cette composition et/ou ce procédé sont très utiles pour lubrifier une surface métallique (surface d'une pièce métallique ou d'une pièce recouverte d'une couche de métal), pour diminuer le coefficient de friction et donc limiter l'usure mécanique des pièces ainsi protégées.

De façon avantageuse, la liaison forte des molécules N et P pour les surfaces recouvertes permet d'éviter que l'utilisateur ou le produit qui est en contact avec ces surfaces ne soit contaminé par ces molécules. Les molécules N et P utilisées en mélange présentent une forte affinité pour les matériaux y compris dans des conditions délétères pour le matériau (i.e. par exemple en présence de détergent, de forte température, d'acide, de base, de rayons UV, d'humidité).

De façon avantageuse, la surface fonctionnalisée obtenue selon le procédé de l'invention est une surface de contact d'une roue d'échappement avec les palettes de l'ancre d'un dispositif d'échappement horloger, ladite surface appartenant à la roue d'échappement et/ou à la palette, comme cela est illustré à la figure 4.
De façon avantageuse, la surface fonctionnalisée obtenue selon le procédé de l'invention est une surface de contact d'un axe et/ou d'une pierre dans laquelle ledit axe pivote.

### Exemples

### Exemple 1 : synthèse de la 2-(perfluoro-2,5,8,11-tetraméthyl-3,6,9,12-tétraoxapentadécanoylamino)-éthylaniine.

A une solution d'éthylène diamine (4 mL, 59.3 mmol) dans 20 mL de THF est ajouté le perfluoro-2,5,8,11-tétraméthyl-3,6,9,12-tétraoxapentadécanoate de méthyle (10 g, 11.9 mmol). Après 18 h d'agitation à température ambiante le mélange réactionnel est concentré sous vide au rotavapor puis séché à la pompe à palettes. L'amine perfluorée est obtenue sous forme d'une huile incolore. Les spectres RMN 1H et 13C (CD30D) effectués sur le produit sont conformes avec la structure attendue.

### Exemple 2: Traitement de surfaces avec un mélange d'une molécule Amine PFPE et d'une molécule Bisphosohonique PFPE

Les pièces traitées sont immergées pendant 5 minutes dans le mélange composé de 10⁻³ mol/L de chacune des molécules dans un solvant composé à 90% d'eau distillée et 10% d'isopropanol. Les pièces sont ensuite prélevées puis rincées pendant 30 secondes dans l'eau distillée. Ces deux étapes sont reproduites une deuxième fois puis les pièces sont séchées sous un flux d'air chaud.

Les molécules utilisées sont les suivantes :
BP-PFPE- 08-202 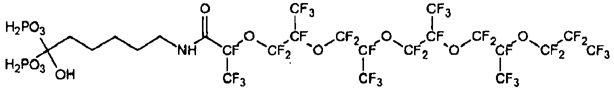
Amine PFPE- 14-101

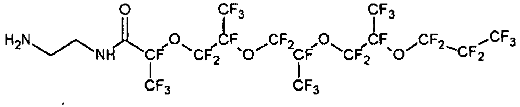

A l'issue de ce traitement, les angles de contact sur ces pièces sont mesurés par dépôt d'une goutte des liquides suivants : eau, glycérol, diiodométhane.

| | Acier | | **Inox** | | Rhodium | | Nickel | |
|---|---|---|---|---|---|---|---|---|
| | avant traitement | après traitement | avant traitement | après traitement | avant traitement | après traitement | avant traitement | après traitement |
| H2O | 88° | **110°** | 47° | **108°** | 58° | **103°** | 65° | **104°** |
| Glycérol | 84° | **103°** | 54° | **98°** | 57° | **108°** | 71° | **98°** |
| Diiodométhane | 38° | **96°** | 40° | **92°** | 44° | **88°** | 46° | **89°** |

| | Or | | Titane | | Verre | | | |
|---|---|---|---|---|---|---|---|---|
| | avant traitement | après traitement | avant traitement | après traitement | avant traitement | après traitement | | |
| H2O | 99° | **111°** | 45° | **104°** | 14° | **101°** | | |
| Glycérol | 83° | **104°** | 50° | **102°** | 12° | **84°** | | |
| Diiodométhane | 34° | **82°** | 40° | **90°** | 37° | **88°** | | |

Dans tous les cas, les matériaux ont été traités efficacement par le mélange amine/acide bisphosphonique.

### Exemple 3: Traitement de surfaces en or avec une molécule Aminé PFPE seule et d'un acide bisphosphonique PFPE seul

En suivant le même protocole de recouvrement que dans l'exemple 2, une surface en or a été recouverte soit d'une amine PFPE 14-101 à 10⁻³ mol/L, soit d'un BP-PFPE 08-202 à 10⁻³ mol/L, soit du mélange de l'exemple 2. Les angles de contact ont été mesurés à partir d'une huile horlogère (Huile Moebius 941) avant dépôt, après dépôt et après un lavage des pièces par un détergent industriel aqueux.

Les molécules utilisées sont les mêmes que pour l'exemple 2.

| angle de contact huile 941 | **Or** | | |
|---|---|---|---|
| | **avant dépôt** | **après dépôt** | **après lavage** |
| BP-PFPE | 25° | 66° | 53° |
| NH2-PFPE | 25° | 42° | 28° |
| mélange | 25° | 81° | 68° |

Ce tableau montre la synergie des deux composés à recouvrir efficacement des matériaux pour lesquels chaque molécule seule n'a que peu d'affinité.

### Exemple 4: Traitement de surfaces par dépôt en deux temps des composés bisphosphonique et amine

Les pièces sont traitées par immersion pendant 10 minutes dans une solution de l'acide bisphosphonique PFPE 08-202 à 2.10⁻³ mol/L dans L'IPA. Les pièces sont ensuite rincées dans l'eau osmosée avant d'être immergées dans une solution aqueuse de l'amine PFPE 14-101 (4.10⁻³ mol/L) pendant 5 minutes puis rincée dans l'eau osmosée pendant 30 secondes. Les pièces sont séchées sous un flux d'air chaud.

Les molécules utilisées sont les mêmes que pour l'exemple 2.

A l'issue de ce traitement, les angles de contact sur ces pièces sont mesurés par dépôt d'une goutte des liquides suivants : eau, glycérol, diiodométhane, huile 941.

**avant recouvrement**

| | Acier Inox | Or | Aluminium |
|---|---|---|---|
| H2O | 99,4° | 103,7° | 91,5° |
| Glycérol | 84,8° | 82,6° | 88,5° |
| Diiodométhane | 43,9° | 41,5° | 42,4° |
| huile 941 | 28,5° | 23,9° | 21,4° |

**après recouvrement**

| | Acier Inox | Or | Aluminium |
|---|---|---|---|
| H2O | 106,7° | 105,3° | 106,8° |
| Glycérol | 104,9° | 100,3° | 100,3° |
| Diiodométhane | 83,6° | 77,6° | 78,3° |
| huile 941 | 71,0° | 58,3° | 63,5° |

Des résultats identiques sont obtenus pour un protocole où les rinçages et les immersions des surfaces traitées sont intégralement réalisés dans l'IPA.

### Exemple 5: modification de l'énergie de surface en fonction de la nature des molécules N et P utilisées

Des substrats d'or d'acier inoxydable 316L et d'aluminium ont été recouverts par différents mélanges de composés P et N suivant le même protocole que celui de l'exemple 3. Les molécules employées sont les suivantes:
la n-octadécylamine (N-C18), l'acide 1-hydroxy hexadecyl-1,1- bisphosphonique (BP-C16), le BP-PFPE- 08-202, l'amine PFPE- 14-101, et l'amine PFPE- 14-102

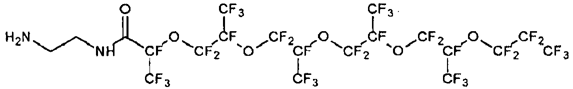

Les résultats sont présentés sur les figures 2 et 3.

La figure 2 représente les angles de contact de gouttes d'eau posées sur des substrats (A=or, B=acier inoxydable, C=aluminium) en fonction du type de revêtement utilisé. Les histogrammes gris foncés représentent le substrat non recouvert (référence), les histogrammes gris clairs représentent l'angle après recouvrement avec une composition, contenant :
- Les molécules 08-202 et 14-101 (histogrammes à gauche),
- Les molécules 08-202 et 14-102 (histogrammes centraux) ou
- Les molécules BP-C16 et N-C18 (histogrammes à droite).

La figure 3 représente les angles de contact de gouttes d'huile 941 posées sur des substrats (A=or, B=acier inoxydable, C=aluminium) en fonction du type de revêtement utilisé. Les histogrammes gris foncés représentent le substrat non recouvert (référence), les histogrammes gris clairs représentent l'angle après recouvrement avec une composition, contenant :
- Les molécules 08-202 et 14-101 (histogrammes à gauche),
- Les molécules 08-202 et 14-102 (histogrammes centraux) ou
- Les molécules BP-C16 et N-C18 (histogrammes à droite).

Ces graphiques montrent qu'il est possible de contrôler les caractères hydrophobe et oléophobe indépendamment l'un de l'autre grâce à l'invention.

## Revendications (Revendications pour l'(les) Etat(s) contractant(s) suivant(s): AL, AT, BE, BG, CH, CY, CZ, DE, DK, EE, ES, FI, GB, GR, HR, HU, IE, IS, IT, LI, LT, LU, LV, MC, MK, MT, NL, NO, PL, PT, RO, RS, SE, SI, SK, SM, TR)

1. Procédé de recouvrement d'une surface destinée à un mécanisme horloger, ou à un dispositif intégré dans un produit horloger, par une couche moléculaire de fonctionnalisation, **caractérisé en ce qu'**il comprend au moins les étapes suivantes :
a) Éventuellement, préparation de ladite surface par un lavage dans un solvant et/ou dans un détergent aqueux puis séchage,
b) Mise en contact de ladite surface avec une composition contenant une quantité efficace de composés phosphoniques, jusqu'à auto-assemblage desdits composés phosphoniques en une couche fine sur ladite surface,
c) Mise en contact de ladite surface avec une composition contenant une quantité efficace de composés aminés, jusqu'à auto-assemblage desdits composés amines en une couche fine sur ladite surface,
d) Elimination du surnageant,
e) Rinçage de la surface fonctionnalisée,
f) Séchage de la surface fonctionnalisée,
dans lequel lesdits composés phosphoniques et lesdits composés amines sont des composés différents et dans lequel :
soit (A1)
ledit composé amine est une amine-perfluorée de formule **(I'-N)** suivante : 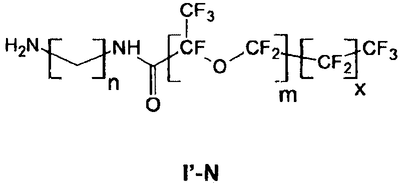 dans laquelle n est un entier compris entre 1 et 100, m est un entier compris entre 0 et 100, et x est un entier compris entre 0 et 10,
et ledit composé phosphonique est un phosphonique perfluoré de formule (**I'-P)** suivante : 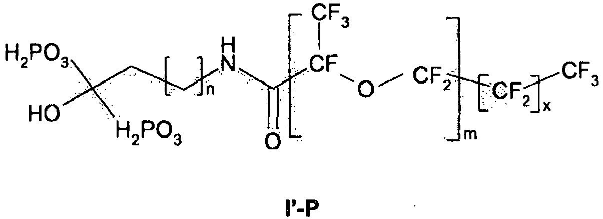 dans laquelle n est un entier compris entre 1 et 100, m est un entier compris entre 0 et 100, et x est un entier compris entre 0 et 10 ;
soit (A2)
ledit composé amine est une alkyle amine linéaire de formule (**I"-N**) suivante : 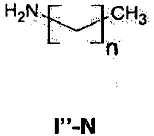 dans laquelle n est un entier compris entre 1 et 100, de préférence entre 5 et 30, et de façon encore plus préférentielle entre 8 et 20,
et ledit composé phosphonique est un composé phosphonique perfluoré de formule (**I"-P**) ou (**I"'-P**) suivantes : 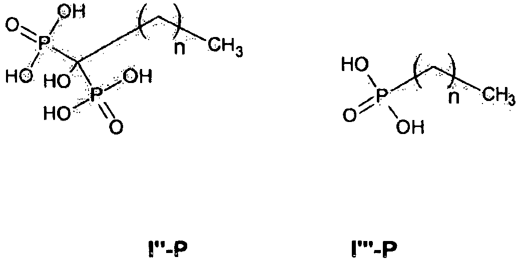 dans lesquelles n est un entier compris entre 1 et 100, de préférence entre 5 et 30, et de façon encore plus préférentielle, entre 8 et 20.

2. Procédé selon la revendication 1, **caractérisé en ce que** les étapes b) et c) sont réalisées successivement, avantageusement d'abord l'étape b) puis l'étape c).

3. Procédé selon la revendication 1, **caractérisé en ce que** les composés amines et phosphoniques sont contenus dans une même composition et les étapes b) et c) sont confondues.

4. Procédé selon l'une quelconque des revendications 1 à 3, **caractérisé en ce que** les étapes b) à f) sont itérées pour l'un, l'autre ou les deux composés phosphonique et amine.

5. Procédé selon l'une quelconque des revendications 1 à 4, dans laquelle ladite surface est constituée à plus de 50 % :
- de métaux et oxydes choisis parmi l'or (Au), le platine (Pt), le palladium (Pd), l'argent (Ag), le rhodium (Rh), le cuivre (Cu), le fer (Fe), le titane (Ti), l'aluminium (Al), le chrome (Cr), le tantale (Ta), les alumines, les zircones, le rubis (alliage d'oxyde d'aluminium et de chrome, n°CAS 12174-49-1), le saphir (oxyde d'aluminium, n° CAS 1317-82-4), le nickel (Ni), le ruthénium (Ru), et l'étain (Sn),
- d'alliages et d'oxydes choisis parmi les aciers (alliage de fer et de carbone), acier inoxydable, laiton (alliage de cuivre et de zinc), maillechort (alliage de cuivre, de nickel, et de zinc), bronze (alliage de cuivre et d'étain), étain-nickel (Sn-Ni), nickel-phosphore (Ni-P), cuivre-béryllium (Cu-Be), palladium-nickel (Pd-Ni), cuivre-cobalt (Cu-Co), ou d'alliages comprenant du vanadium (V), du chrome (Cr), du manganèse (Mn), du zinc (Zn), du tungstène (W), ou du zirconium (Zr), ou d'un alliage amorphe, ou de céramiques, comme par exemple les oxydes de zirconium (ZrOx) de titane (TiOx) ou de tantale (TaxOy).

6. Procédé selon l'une quelconque des revendications 1 à 5, **caractérisé en ce que** lesdits composés phosphoniques et amines sont dissous dans un solvant choisi parmi l'eau, les solvants alcooliques, en particulier les alcools en C₁ à C₆, tels que l'isopropanol, l'éthanol, le méthanol, les aldéhydes, les cétones tels que l'acétone, des éthers tels que le diéthyléther ou le tétrahydrofurane ou les alcanes, notamment des alcanes en C₁ à C₈, ainsi que leurs mélanges, ou dans un solvant composé de naphtas hydrotraités en mélange avec de l'isopropanol ou de l'acétone.

7. Utilisation d'une couche moléculaire de fonctionnalisation obtenue selon le procédé de l'une des revendications 1 à 6 pour recouvrir une surface destinée à être utilisée dans un mécanisme horloger ou dans un dispositif intégré dans un produit horloger.

8. Utilisation d'une couche moléculaire de fonctionnalisation obtenue selon le procédé de l'une des revendications 1 à 6 pour augmenter l'hydrophobicité et/ou la lipophobicité d'une surface afin de favoriser la lubrification de la surface ou d'empêcher l'étalement d'un lubrifiant, ladite surface étant destinée à être utilisée dans un mécanisme horloger ou dans un dispositif intégré dans un produit horloger.

9. Utilisation d'une couche moléculaire de fonctionnalisation obtenue selon le procédé de l'une des revendications **1** à **6** pour recouvrir une surface destinée à être utilisée dans un mécanisme horloger ou dans un dispositif intégré dans un produit horloger, dans laquelle les deux compositions sont appliquées de façon séquentielle ou simultanée.

10. Utilisation d'une couche moléculaire de fonctionnalisation selon la revendication 8, dans laquelle les deux compositions sont appliquées de façon séquentielle ou simultanée.

11. Utilisation selon l'une quelconque des revendications 7 à 10, **caractérisée en ce que** lesdites surfaces sont constituées à plus de 50%, de préférence à plus de 75%, de manière encore plus préférée à plus de 85%, voire même à plus de 95% :
- de métaux et oxydes choisis parmi l'or (Au), le platine (Pt), l'argent (Ag), le palladium (Pd), le rhodium (Rh), le cuivre (Cu), le fer (Fe), le titane (Ti), l'aluminium (Al), le chrome (Cr), le tantale (Ta), les alumines, les zircones, le rubis (alliage d'oxyde d'aluminium et de chrome, n°CAS 12174-49-1), le saphir (oxyde d'aluminium, n° CAS 1317-82-4), le nickel (Ni), le ruthénium (Ru), et l'étain (Sn),
- d'alliages et d'oxydes choisis parmi les aciers (alliage de fer et de carbone), acier inoxydable, laiton (alliage de cuivre et de zinc), maillechort (alliage de cuivre, de nickel, et de zinc), bronze (alliage de cuivre et d'étain), étain-nickel (Sn-Ni), nickel-phosphore (Ni-P), cuivre-béryllium (Cu-Be), palladium-nickel (Pd-Ni), cuivre-cobalt (Cu-Co), ou d'alliages comprenant du vanadium (V), du chrome (Cr), du manganèse (Mn), du zinc (Zn), du tungstène (W), ou du zirconium (Zr), ou d'un alliage amorphe, ou de céramiques, comme par exemple les oxydes de zirconium (ZrOx) de Titane (TiOx) ou de tantale (TaxOy).

12. Surface fonctionnalisée obtenue selon le procédé de l'une des revendications 1 à 6, ladite surface étant destinée à être utilisée dans un mécanisme horloger, ou dans un dispositif intégré dans un produit horloger.

13. Surface fonctionnalisée obtenue selon le procédé de l'une des revendications 1 à 6, **caractérisée en ce que** ladite surface est une surface de contact d'une roue d'échappement avec les palettes de l'ancre d'un dispositif d'échappement horloger, ladite surface appartenant à la roue d'échappement et/ou à la palette.

14. Surface fonctionnalisée obtenue selon le procédé de l'une des revendications 1 à 6, **caractérisée en ce que** ladite surface est une surface de contact d'un axe et/ou d'une pierre dans laquelle ledit axe pivote.

## Revendications (Revendications pour l'(les) Etat(s) contractant(s) suivant(s): FR)

1. Procédé de recouvrement d'une surface d'un mécanisme horloger, ou d'un dispositif intégré dans un produit horloger, par une couche moléculaire de fonctionnalisation, **caractérisé en ce qu'**il comprend au moins les étapes suivantes :
a) Éventuellement, préparation de ladite surface par un lavage dans un solvant et/ou dans un détergent aqueux puis séchage,
b) Mise en contact de ladite surface avec une composition contenant une quantité efficace de composés phosphoniques, jusqu'à auto-assemblage desdits composés phosphoniques en une couche fine sur ladite surface,
c) Mise en contact de ladite surface avec une composition contenant une quantité efficace de composés aminés, jusqu'à auto-assemblage desdits composés amines en une couche fine sur ladite surface,
d) Elimination du surnageant,
e) Rinçage de la surface fonctionnalisée,
f) Séchage de la surface fonctionnalisée,
dans lequel lesdits composés phosphoniques et lesdits composés amines sont des composés différents et dans lequel :
soit (A1)
ledit composé amine est une amine-perfluorée de formule **(I'-N)** suivante : 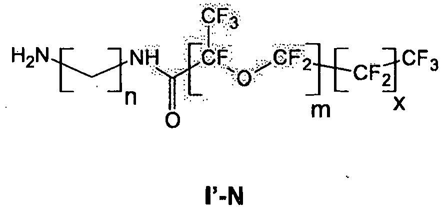 dans laquelle n est un entier compris entre 1 et 100, m est un entier compris entre 0 et 100, et x est un entier compris entre 0 et 10,
et ledit composé phosphonique est un phosphonique perfluoré de formule (**I'-P**) suivante : 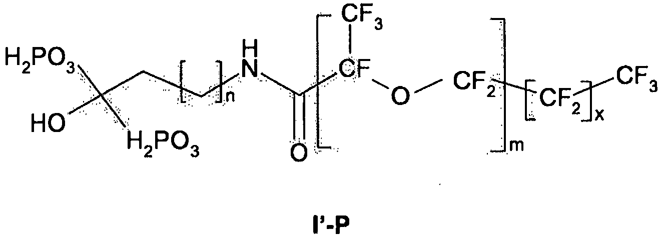 dans laquelle n est un entier compris entre 1 et 100, m est un entier compris entre 0 et 100, et x est un entier compris entre 0 et 10 ;
soit (A2)
ledit composé amine est une alkyle amine linéaire de formule (**I"-N**) suivante : 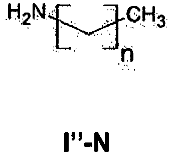 dans laquelle n est un entier compris entre 1 et 100, de préférence entre 5 et 30, et de façon encore plus préférentielle entre 8 et 20,
et ledit composé phosphonique est un composé phosphonique perfluoré de formule **(I"-P)** ou **(I"'-P)** suivantes : 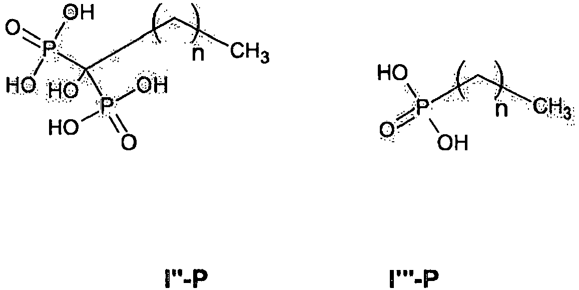 dans lesquelles n est un entier compris entre 1 et 100, de préférence entre 5 et 30, et de façon encore plus préférentielle, entre 8 et 20.

2. Procédé selon la revendication 1, **caractérisé en ce que** les étapes b) et c) sont réalisées successivement, avantageusement d'abord l'étape b) puis l'étape c).

3. Procédé selon la revendication 1, **caractérisé en ce que** les composés amines et phosphoniques sont contenus dans une même composition et les étapes b) et c) sont confondues.

4. Procédé selon l'une quelconque des revendications 1 à 3, **caractérisé en ce que** les étapes b) à f) sont itérées pour l'un, l'autre ou les deux composés phosphonique et amine.

5. Procédé selon l'une quelconque des revendications 1 à 4, dans laquelle ladite surface est constituée à plus de 50 % :
- de métaux et oxydes choisis parmi l'or (Au), le platine (Pt), le palladium (Pd), l'argent (Ag), le rhodium (Rh), le cuivre (Cu), le fer (Fe), le titane (Ti), l'aluminium (Al), le chrome (Cr), le tantale (Ta), les alumines, les zircones, le rubis (alliage d'oxyde d'aluminium et de chrome, n°CAS 12174-49-1), le saphir (oxyde d'aluminium, n° CAS 1317-82-4), le nickel (Ni), le ruthénium (Ru), et l'étain (Sn),
- d'alliages et d'oxydes choisis parmi les aciers (alliage de fer et de carbone), acier inoxydable, laiton (alliage de cuivre et de zinc), maillechort (alliage de cuivre, de nickel, et de zinc), bronze (alliage de cuivre et d'étain), étain-nickel (Sn-Ni), nickel-phosphore (Ni-P), cuivre-béryllium (Cu-Be), palladium-nickel (Pd-Ni), cuivre-cobalt (Cu-Co), ou d'alliages comprenant du vanadium (V), du chrome (Cr), du manganèse (Mn), du zinc (Zn), du tungstène (W), ou du zirconium (Zr), ou d'un alliage amorphe, ou de céramiques, comme par exemple les oxydes de zirconium (ZrOx) de titane (TiOx) ou de tantale (TaxOy).

6. Procédé selon l'une quelconque des revendications 1 à 5, **caractérisé en ce que** lesdits composés phosphoniques et amines sont dissous dans un solvant choisi parmi l'eau, les solvants alcooliques, en particulier les alcools en C₁ à C₆, tels que l'isopropanol, l'éthanol, le méthanol, les aldéhydes, les cétones tels que l'acétone, des éthers tels que le diéthyléther ou le tétrahydrofurane ou les alcanes, notamment des alcanes en C₁ à C₈, ainsi que leurs mélanges, ou dans un solvant composé de naphtas hydrotraités en mélange avec de l'isopropanol ou de l'acétone.

7. Utilisation d'une couche moléculaire de fonctionnalisation obtenue selon le procédé de l'une des revendications 1 à 6 pour recouvrir une surface utilisée dans un mécanisme horloger ou dans un dispositif intégré dans un produit horloger.

8. Utilisation d'une couche moléculaire de fonctionnalisation obtenue selon le procédé de l'une des revendications 1 à 6 pour augmenter l'hydrophobicité et/ou la lipophobicité d'une surface afin de favoriser la lubrification de la surface ou d'empêcher l'étalement d'un lubrifiant, ladite surface étant utilisée dans un mécanisme horloger ou dans un dispositif intégré dans un produit horloger.

9. Utilisation d'une couche moléculaire de fonctionnalisation obtenue selon le procédé de l'une des revendications 1 à 6 pour recouvrir une surface utilisée dans un mécanisme horloger ou dans un dispositif intégré dans un produit horloger, dans laquelle les deux compositions sont appliquées de façon séquentielle ou simultanée.

10. Utilisation d'une couche moléculaire de fonctionnalisation selon la revendication 8, dans laquelle les deux compositions sont appliquées de façon séquentielle ou simultanée.

11. Utilisation selon l'une quelconque des revendications 7 à 10, **caractérisée en ce que** lesdites surfaces sont constituées à plus de 50%, de préférence à plus de 75%, de manière encore plus préférée à plus de 85%, voire même à plus de 95% :
- de métaux et oxydes choisis parmi l'or (Au), le platine (Pt), l'argent (Ag), le palladium (Pd), le rhodium (Rh), le cuivre (Cu), le fer (Fe), le titane (Ti), l'aluminium (Al), le chrome (Cr), le tantale (Ta), les alumines, les zircones, le rubis (alliage d'oxyde d'aluminium et de chrome, n°CAS 12174-49-1), le saphir (oxyde d'aluminium, n° CAS 1317-82-4), le nickel (Ni), le ruthénium (Ru), et l'étain (Sn),
- d'alliages et d'oxydes choisis parmi les aciers (alliage de fer et de carbone), acier inoxydable, laiton (alliage de cuivre et de zinc), maillechort (alliage de cuivre, de nickel, et de zinc), bronze (alliage de cuivre et d'étain), étain-nickel (Sn-Ni), nickel-phosphore (Ni-P), cuivre-béryllium (Cu-Be), palladium-nickel (Pd-Ni), cuivre-cobalt (Cu-Co), ou d'alliages comprenant du vanadium (V), du chrome (Cr), du manganèse (Mn), du zinc (Zn), du tungstène (W), ou du zirconium (Zr), ou d'un alliage amorphe, ou de céramiques, comme par exemple les oxydes de zirconium (ZrOx) de Titane (TiOx) ou de tantale (TaxOy).

12. Surface fonctionnalisée obtenue selon le procédé de l'une des revendications 1 à 6, ladite surface étant utilisée dans un mécanisme horloger, ou dans un dispositif intégré dans un produit horloger.

13. Surface fonctionnalisée obtenue selon le procédé de l'une des revendications 1 à 6, **caractérisée en ce que** ladite surface est une surface de contact d'une roue d'échappement avec les palettes de l'ancre d'un dispositif d'échappement horloger, ladite surface appartenant à la roue d'échappement et/ou à la palette.

14. Surface fonctionnalisée obtenue selon le procédé de l'une des revendications 1 à 6, **caractérisée en ce que** ladite surface est une surface de contact d'un axe et/ou d'une pierre dans laquelle ledit axe pivote.

## Patentansprüche (Patentansprüche für folgende(n) Vertragsstaat(en): AL, AT, BE, BG, CH, CY, CZ, DE, DK, EE, ES, FI, GB, GR, HR, HU, IE, IS, IT, LI, LT, LU, LV, MC, MK, MT, NL, NO, PL, PT, RO, RS, SE, SI, SK, SM, TR)

1. Verfahren zum Überziehen einer Oberfläche, die für einen Uhrenmechanismus oder eine in ein Uhrenprodukt integrierte Vorrichtung geeignet ist, mit einer molekularen Funktionalisierungsschicht, **dadurch gekennzeichnet, dass** es mindestens die folgenden Schritte umfasst:
a) Gegebenenfalls Vorbereiten der Oberfläche durch Waschen in einem Lösungsmittel und/oder in einem wässerigen Reinigungsmittel, dann Trocknen,
b) Inkontaktbringen der Oberfläche mit einer Zusammensetzung, die eine wirksame Menge an Phosphonverbindungen enthält, bis zur Selbstkonfektionierung der Phosphonverbindungen zu einer dünnen Schicht auf der Oberfläche,
c) Inkontaktbringen der Oberfläche mit einer Zusammensetzung, die eine wirksame Menge an Aminverbindungen enthält, bis zur Selbstkonfektionierung der Aminverbindungen zu einer dünnen Schicht auf der Oberfläche,
d) Beseitigen des Überstandes,
e) Spülen der funktionalisierten Oberfläche,
f) Trocknen der funktionalisierten Oberfläche,
wobei die Phosphonverbindungen und die Aminverbindungen verschiedene Verbindungen sind und wobei:
entweder (A1)
die Aminverbindung ein perfluoriertes Amin der folgenden Formel (I'-N) ist: 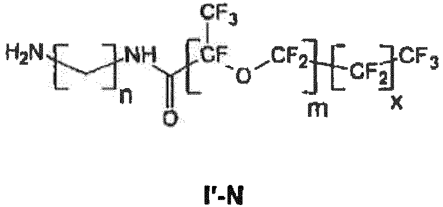 in der n eine ganze Zahl zwischen 1 und 100 ist, m eine ganze Zahl zwischen 0 und 100 ist und x eine ganze Zahl zwischen 0 und 10 ist,
und die Phosphonverbindung ein perfluoriertes Phosphon der folgenden Formel (I'-P) ist: 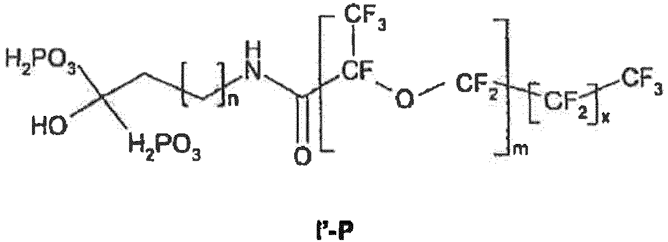 in der n eine ganze Zahl zwischen 1 und 100 ist, m eine ganze Zahl zwischen 0 und 100 ist und x eine ganze Zahl zwischen 0 und 10 ist;
oder (A2)
die Aminverbindung ein lineares Alkylamin der folgenden Formel (I"-N) ist: 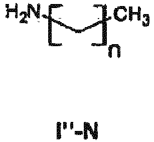 in der n eine ganze Zahl zwischen 1 und 100, vorzugsweise zwischen 5 und 30 und besonders bevorzugt zwischen 8 und 20 ist,
und die Phosphonverbindung eine perfluorierte Phosphonverbindung der folgenden Formel (I"-P) oder (I"'-P) ist: 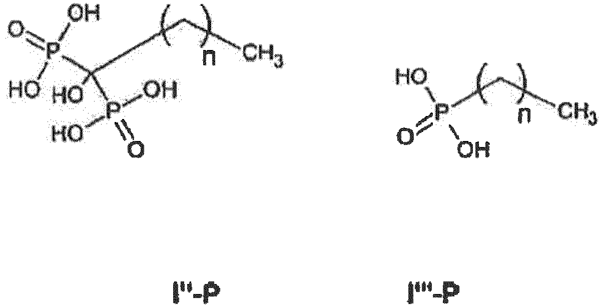 in denen n eine ganze Zahl zwischen 1 und 100, vorzugsweise zwischen 5 und 30 und besonders bevorzugt zwischen 8 und 20 ist.

2. Verfahren nach Anspruch 1, **dadurch gekennzeichnet, dass** die Schritte b) und c) nacheinander, vorzugsweise zuerst Schritt b), dann Schritt c), ausgeführt werden.

3. Verfahren nach Anspruch 1, **dadurch gekennzeichnet, dass** die Amin- und Phosphonverbindungen in ein und derselben Zusammensetzung enthalten sind und die Schritte b) und c) zusammenfallen.

4. Verfahren nach einem der Ansprüche 1 bis 3, **dadurch gekennzeichnet, dass** die Schritte b) bis f) für die eine, die andere oder beide, Phosphon- und Aminverbindungen, wiederholt werden.

5. Verfahren nach einem der Ansprüche 1 bis 4, bei dem die Oberfläche zu mehr als 50 % gebildet ist aus:
- Metallen und Oxiden, die ausgewählt sind aus Gold (Au), Platin (Pt), Palladium (Pd), Silber (Ag), Rhodium (Rh), Kupfer (Cu), Eisen (Fe), Titan (Ti), Aluminium (AI), Chrom (Cr), Tantal (Ta), Tonerden, Zirkonoxiden, Rubin (Legierung aus Aluminium- und Chromoxid, Nr. CAS 12174-49-1), Saphir (Aluminiumoxid, Nr. CAS 1317-82-4), Nickel (Ni), Ruthenium (Ru) und Zinn (Sn),
Legierungen und Oxiden, die ausgewählt sind aus Stählen (Legierung aus Eisen und Kohlenstoff), Edelstahl, Messing (Legierung aus Kupfer und Zink), Neusilber (Legierung aus Kupfer, Nickel und Zink), Bronze (Legierung aus Kupfer und Zinn), Zinn-Nickel (Sn-Ni), Nickel-Phosphor (Ni-P), Kupfer-Beryllium (Cu-Be), Palladium-Nickel (Pd-Ni), Kupfer-Kobalt (Cu-Co) oder Legierungen mit Vanadium (V), Chrom (Cr), Mangan (Mn), Zink (Zn), Wolfram (W) oder Zirkonium (Zr) oder einer amorphen Legierung oder Keramiken wie beispielsweise den Oxiden von Zirkonium (ZrOx), Titan (TiOx) oder Tantal (TaxOy).

6. Verfahren nach einem der Ansprüche 1 bis 5, **dadurch gekennzeichnet, dass** die Phosphon- und Aminverbindungen gelöst sind in einem Lösungsmittel, das ausgewählt ist aus Wasser, den alkoholischen Lösungsmitteln, insbesondere den C₁- bis C₆-Alkoholen, wie Isopropanol, Ethanol, Methanol, den Aldehyden, den Ketonen wie Aceton, Ethern wie Diethylether oder Tetrahydrofuran oder den Alkanen, insbesondere C₁- bis C₈-Alkanen, sowie ihren Gemischen, oder in einem Lösungsmittel, das aus wasserstoffbehandeltem Naphtha im Gemisch mit Isopropanol oder Aceton besteht.

7. Verwendung einer gemäß dem Verfahren nach einem der Ansprüche 1 bis 6 erhaltenen molekularen Funktionalisierungsschicht, um eine Oberfläche zu überziehen, die zur Verwendung in einem Uhrenmechanismus oder in einer in ein Uhrenprodukt integrierten Vorrichtung geeignet ist.

8. Verwendung einer gemäß dem Verfahren nach einem der Ansprüche 1 bis 6 erhaltenen molekularen Funktionalisierungsschicht zum Erhöhen der Hydrophobizität und/oder der Lipophobizität einer Oberfläche, um die Schmierung der Oberfläche zu fördern oder die Ausbreitung eines Schmiermittels zu verhindern, wobei die Oberfläche zur Verwendung in einem Uhrenmechanismus oder in einer in ein Uhrenprodukt integrierten Vorrichtung geeignet ist.

9. Verwendung einer gemäß dem Verfahren nach einem der Ansprüche 1 bis 6 erhaltenen molekularen Funktionalisierungsschicht, um eine Oberfläche zu überziehen, die zur Verwendung in einem Uhrenmechanismus oder in einer in ein Uhrenprodukt integrierten Vorrichtung geeignet ist, bei der die zwei Zusammensetzungen nacheinander oder gleichzeitig aufgebracht werden.

10. Verwendung einer molekularen Funktionalisierungsschicht nach Anspruch 8, bei der die zwei Zusammensetzungen nacheinander oder gleichzeitig aufgebracht werden.

11. Verwendung nach einem der Ansprüche 7 bis 10, **dadurch gekennzeichnet, dass** die Oberflächen zu mehr als 50 %, vorzugsweise zu mehr als 75 %, besonders bevorzugt zu mehr als 85 %, sogar zu mehr als 95 % gebildet sind aus:
Metallen und Oxiden, die ausgewählt sind aus Gold (Au), Platin (Pt), Silber (Ag), Palladium (Pd), Rhodium (Rh), Kupfer (Cu), Eisen (Fe), Titan (Ti), Aluminium (Al), Chrom (Cr), Tantal (Ta), Tonerden, Zirkonoxiden, Rubin (Legierung aus Aluminium- und Chromoxid, Nr. CAS 12174-49-1), Saphir (Aluminiumoxid, Nr. CAS 1317-82-4), Nickel (Ni), Ruthenium (Ru) und Zinn (Sn),
Legierungen und Oxiden, die ausgewählt sind aus Stählen (Legierung aus Eisen und Kohlenstoff), Edelstahl, Messing (Legierung aus Kupfer und Zink), Neusilber (Legierung aus Kupfer, Nickel und Zink), Bronze (Legierung aus Kupfer und Zinn), Zinn-Nickel (Sn-Ni), Nickel-Phosphor (Ni-P), Kupfer-Beryllium (Cu-Be), Palladium-Nickel (Pd-Ni), Kupfer-Kobalt (Cu-Co) oder Legierungen mit Vanadium (V), Chrom (Cr), Mangan (Mn), Zink (Zn), Wolfram (W) oder Zirkonium (Zr) oder einer amorphen Legierung oder Keramiken wie beispielsweise den Oxiden von Zirkonium (ZrOx), Titan (TiOx) oder Tantal (TaxOy).

12. Funktionalisierte Oberfläche, die gemäß dem Verfahren nach einem der Ansprüche 1 bis 6 erhalten wird, wobei die Oberfläche zur Verwendung in einem Uhrenmechanismus oder in einer in ein Uhrenprodukt integrierten Vorrichtung geeignet ist.

13. Funktionalisierte Oberfläche, die gemäß dem Verfahren nach einem der Ansprüche 1 bis 6 erhalten wird, **dadurch gekennzeichnet, dass** die Oberfläche eine Kontaktfläche eines Hemmungsrades mit den Paletten des Ankes einer Uhrenhemmungsvorrichtung ist, wobei die Oberfläche zum Hemmungsrad und/oder zur Palette gehört.

14. Funktionalisierte Oberfläche, die gemäß dem Verfahren nach einem der Ansprüche 1 bis 6 erhalten wird, **dadurch gekennzeichnet, dass** die Oberfläche eine Kontaktfläche einer Welle und/oder eines Steins ist, in dem die Welle schwenkt.

## Patentansprüche (Patentansprüche für folgende(n) Vertragsstaat(en): FR)

1. Verfahren zum Überziehen einer Oberfläche eines Uhrenmechanismus oder einer in ein Uhrenprodukt integrierte Vorrichtung, mit einer molekularen Funktionalisierungsschicht, **dadurch gekennzeichnet, dass** es mindestens die folgenden Schritte umfasst:
a) Gegebenenfalls Vorbereiten der Oberfläche durch Waschen in einem Lösungsmittel und/oder in einem wässerigen Reinigungsmittel, dann Trocknen,
b) Inkontaktbringen der Oberfläche mit einer Zusammensetzung, die eine wirksame Menge an Phosphonverbindungen enthält, bis zur Selbstkonfektionierung der Phosphonverbindungen zu einer dünnen Schicht auf der Oberfläche,
c) Inkontaktbringen der Oberfläche mit einer Zusammensetzung, die eine wirksame Menge an Aminverbindungen enthält, bis zur Selbstkonfektionierung der Aminverbindungen zu einer dünnen Schicht auf der Oberfläche,
d) Beseitigen des Überstandes,
e) Spülen der funktionalisierten Oberfläche,
f) Trocknen der funktionalisierten Oberfläche,
wobei die Phosphonverbindungen und die Aminverbindungen verschiedene Verbindungen sind und wobei:
entweder (A1)
die Aminverbindung ein perfluoriertes Amin der folgenden Formel (I'-N) ist: 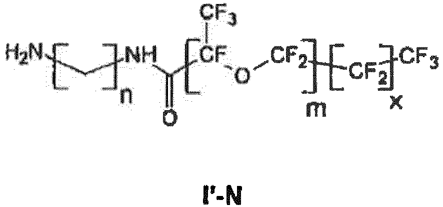 in der n eine ganze Zahl zwischen 1 und 100 ist, m eine ganze Zahl zwischen 0 und 100 ist und x eine ganze Zahl zwischen 0 und 10 ist,
und die Phosphonverbindung ein perfluoriertes Phosphon der folgenden Formel (I'-P) ist: 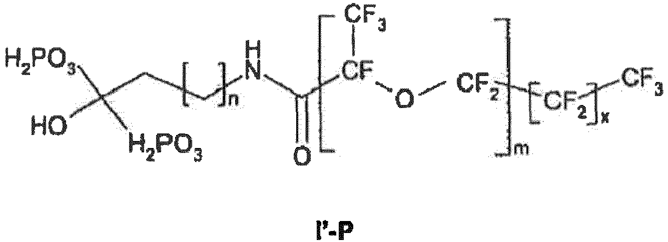 in der n eine ganze Zahl zwischen 1 und 100 ist, m eine ganze Zahl zwischen 0 und 100 ist und x eine ganze Zahl zwischen 0 und 10 ist;
oder (A2)
die Aminverbindung ein lineares Alkylamin der folgenden Formel (I"-N) ist: 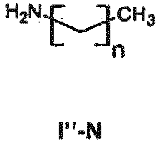 in der n eine ganze Zahl zwischen 1 und 100, vorzugsweise zwischen 5 und 30 und besonders bevorzugt zwischen 8 und 20 ist,
und die Phosphonverbindung eine perfluorierte Phosphonverbindung der folgenden Formel (I"-P) oder (l"'-P) ist: 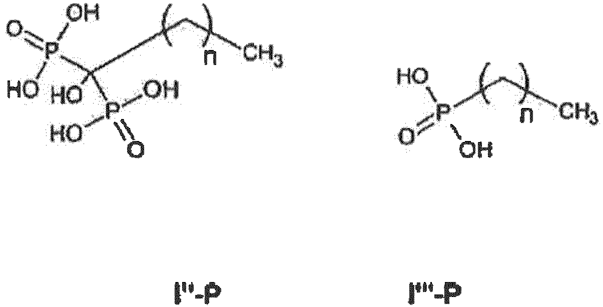 in denen n eine ganze Zahl zwischen 1 und 100, vorzugsweise zwischen 5 und 30 und besonders bevorzugt zwischen 8 und 20 ist.

2. Verfahren nach Anspruch 1, **dadurch gekennzeichnet, dass** die Schritte b) und c) nacheinander, vorzugsweise zuerst Schritt b), dann Schritt c), ausgeführt werden.

3. Verfahren nach Anspruch 1, **dadurch gekennzeichnet, dass** die Amin- und Phosphonverbindungen in ein und derselben Zusammensetzung enthalten sind und die Schritte b) und c) zusammenfallen.

4. Verfahren nach einem der Ansprüche 1 bis 3, **dadurch gekennzeichnet, dass** die Schritte b) bis f) für die eine, die andere oder beide, Phosphon- und Aminverbindungen, wiederholt werden.

5. Verfahren nach einem der Ansprüche 1 bis 4, bei dem die Oberfläche zu mehr als 50 % gebildet ist aus:
- Metallen und Oxiden, die ausgewählt sind aus Gold (Au), Platin (Pt), Palladium (Pd), Silber (Ag), Rhodium (Rh), Kupfer (Cu), Eisen (Fe), Titan (Ti), Aluminium (Al), Chrom (Cr), Tantal (Ta), Tonerden, Zirkonoxiden, Rubin (Legierung aus Aluminium- und Chromoxid, Nr. CAS 12174-49-1), Saphir (Aluminiumoxid, Nr. CAS 1317-82-4), Nickel (Ni), Ruthenium (Ru) und Zinn (Sn),
Legierungen und Oxiden, die ausgewählt sind aus Stählen (Legierung aus Eisen und Kohlenstoff), Edelstahl, Messing (Legierung aus Kupfer und Zink), Neusilber (Legierung aus Kupfer, Nickel und Zink), Bronze (Legierung aus Kupfer und Zinn), Zinn-Nickel (Sn-Ni), Nickel-Phosphor (Ni-P), Kupfer-Beryllium (Cu-Be), Palladium-Nickel (Pd-Ni), Kupfer-Kobalt (Cu-Co) oder Legierungen mit Vanadium (V), Chrom (Cr), Mangan (Mn), Zink (Zn), Wolfram (W) oder Zirkonium (Zr) oder einer amorphen Legierung oder Keramiken wie beispielsweise den Oxiden von Zirkonium (ZrOx), Titan (TiOx) oder Tantal (TaxOy).

6. Verfahren nach einem der Ansprüche 1 bis 5, **dadurch gekennzeichnet, dass** die Phosphon- und Aminverbindungen gelöst sind in einem Lösungsmittel, das ausgewählt ist aus Wasser, den alkoholischen Lösungsmitteln, insbesondere den C₁- bis C₆-Alkoholen, wie Isopropanol, Ethanol, Methanol, den Aldehyden, den Ketonen wie Aceton, Ethern wie Diethylether oder Tetrahydrofuran oder den Alkanen, insbesondere C₁- bis C₈-Alkanen, sowie ihren Gemischen, oder in einem Lösungsmittel, das aus wasserstoffbehandeltem Naphtha im Gemisch mit Isopropanol oder Aceton besteht.

7. Verwendung einer gemäß dem Verfahren nach einem der Ansprüche 1 bis 6 erhaltenen molekularen Funktionalisierungsschicht, um eine Oberfläche zu überziehen, die zur Verwendung in einem Uhrenmechanismus oder in einer in ein Uhrenprodukt integrierten Vorrichtung geeignet ist.

8. Verwendung einer gemäß dem Verfahren nach einem der Ansprüche 1 bis 6 erhaltenen molekularen Funktionalisierungsschicht zum Erhöhen der Hydrophobizität und/oder der Lipophobizität einer Oberfläche, um die Schmierung der Oberfläche zu fördern oder die Ausbreitung eines Schmiermittels zu verhindern, wobei die Oberfläche in einem Uhrenmechanismus oder in einer in ein Uhrenprodukt integrierten Vorrichtung verwendet ist.

9. Verwendung einer gemäß dem Verfahren nach einem der Ansprüche 1 bis 6 erhaltenen molekularen Funktionalisierungsschicht, um eine Oberfläche zu überziehen, die zur Verwendung in einem Uhrenmechanismus oder in einer in ein Uhrenprodukt integrierten Vorrichtung geeignet ist, bei der die zwei Zusammensetzungen nacheinander oder gleichzeitig aufgebracht werden.

10. Verwendung einer molekularen Funktionalisierungsschicht nach Anspruch 8, bei der die zwei Zusammensetzungen nacheinander oder gleichzeitig aufgebracht werden.

11. Verwendung nach einem der Ansprüche 7 bis 10, **dadurch gekennzeichnet, dass** die Oberflächen zu mehr als 50 %, vorzugsweise zu mehr als 75 %, besonders bevorzugt zu mehr als 85 %, sogar zu mehr als 95 % gebildet sind aus:
Metallen und Oxiden, die ausgewählt sind aus Gold (Au), Platin (Pt), Silber (Ag), Palladium (Pd), Rhodium (Rh), Kupfer (Cu), Eisen (Fe), Titan (Ti), Aluminium (Al), Chrom (Cr), Tantal (Ta), Tonerden, Zirkonoxiden, Rubin (Legierung aus Aluminium- und Chromoxid, Nr. CAS 12174-49-1), Saphir (Aluminiumoxid, Nr. CAS 1317-82-4), Nickel (Ni), Ruthenium (Ru) und Zinn (Sn),
Legierungen und Oxiden, die ausgewählt sind aus Stählen (Legierung aus Eisen und Kohlenstoff), Edelstahl, Messing (Legierung aus Kupfer und Zink), Neusilber (Legierung aus Kupfer, Nickel und Zink), Bronze (Legierung aus Kupfer und Zinn), Zinn-Nickel (Sn-Ni), Nickel-Phosphor (Ni-P), Kupfer-Beryllium (Cu-Be), Palladium-Nickel (Pd-Ni), Kupfer-Kobalt (Cu-Co) oder Legierungen mit Vanadium (V), Chrom (Cr), Mangan (Mn), Zink (Zn), Wolfram (W) oder Zirkonium (Zr) oder einer amorphen Legierung oder Keramiken wie beispielsweise den Oxiden von Zirkonium (ZrOx), Titan (TiOx) oder Tantal (TaxOy).

12. Funktionalisierte Oberfläche, die gemäß dem Verfahren nach einem der Ansprüche 1 bis 6 erhalten wird, wobei die Oberfläche in einem Uhrenmechanismus oder in einer in ein Uhrenprodukt integrierten Vorrichtung verwendet ist.

13. Funktionalisierte Oberfläche, die gemäß dem Verfahren nach einem der Ansprüche 1 bis 6 erhalten wird, **dadurch gekennzeichnet, dass** die Oberfläche eine Kontaktfläche eines Hemmungsrades mit den Paletten des Ankes einer Uhrenhemmungsvorrichtung ist, wobei die Oberfläche zum Hemmungsrad und/oder zur Palette gehört.

14. Funktionalisierte Oberfläche, die gemäß dem Verfahren nach einem der Ansprüche 1 bis 6 erhalten wird, **dadurch gekennzeichnet, dass** die Oberfläche eine Kontaktfläche einer Welle und/oder eines Steins ist, in dem die Welle schwenkt.

## Claims (Claims for the following Contracting State(s): AL, AT, BE, BG, CH, CY, CZ, DE, DK, EE, ES, FI, GB, GR, HR, HU, IE, IS, IT, LI, LT, LU, LV, MC, MK, MT, NL, NO, PL, PT, RO, RS, SE, SI, SK, SM, TR)

1. A process for coating a surface intended for a clock mechanism or a device integrated into a watch product with a molecular functionalisation layer, **characterised in that** it comprises at least the following steps:
a) optionally preparing said surface by washing in a solvent and/or in an aqueous detergent, then drying,
b) placing said surface in contact with a composition containing an effective quantity of phosphonic compounds until self-assembly of said phosphonic compounds to a fine layer on said surface,
c) placing said surface in contact with a composition containing an effective quantity of amine compounds until self-assembly of said amine compounds to a fine layer on said surface,
d) removing the supernatant,
e) rinsing the functionalised surface,
f) drying the functionalised surface,
wherein said phosphonic compounds and said amine compounds are different compounds and wherein:
either (A1)
said amine compound is a perfluorinated amine of the following formula **(I'-N):** 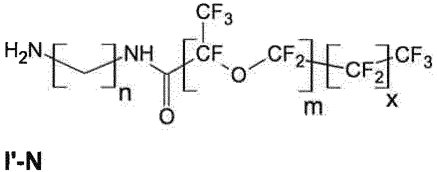
in which n is an integer in the range of between 1 and 100, m is an integer in the range of between 0 and 100 and x is an integer in the range of between 0 and 10,
and said phosphonic compound is a perfluorinated phosphonic compound of the following formula (**I'-P**): 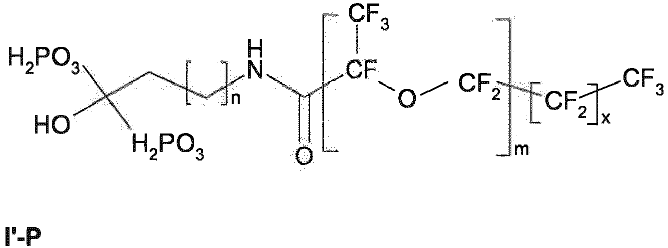 in which n is an integer in the range of between 1 and 100, m is an integer in the range of between 0 and 100 and x is an integer in the range of between 0 and 10;
or (A2)
said amine compound is a linear alkyl amine of the following formula (**I"-N**): 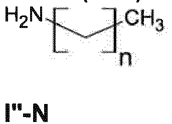
in which n is an integer in the range of between 1 and 100, preferably between 5 and 30, and even more preferred between 8 and 20;
and said phosphonic compound is a perfluorinated phosphonic compound of the following formulae (**I"-P**) and (**I"'-P**): 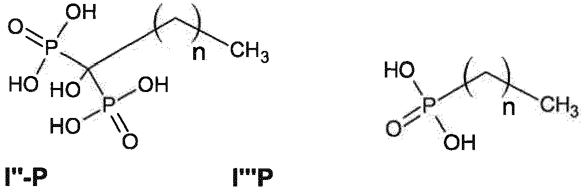 in which n is an integer in the range of between 1 and 100, preferably between 5 and 30 and even more preferred between 8 and 20.

2. The process according to claim 1, **characterised in that** steps b) and c) are carried out in succession, advantageously step b) first, then step c).

3. The process according to claim 1, **characterised in that** the amine and phosphonic compounds are contained in the same composition and steps b) and c) are combined in only one step.

4. The process according to any one of claims 1 to 3, **characterised in that** steps b) to f) are repeated for one, the other or both of the phosphonic and amine compounds.

5. The process according to any one of claims 1 to 4, in which said surface is formed to more than 50%:
• of metals and oxides chosen from gold (Au), platinum (Pt), palladium (Pd), silver (Ag), rhodium (Rh), copper (Cu), iron (Fe), titanium (Ti), aluminium (Al), chromium (Cr), tantalum (Ta), aluminas, zirconias, ruby (alloy of aluminium oxide and chromium, n° CAS 12174-49-1), sapphire (aluminium oxide, n° CAS 1317-82-4), nickel (Ni), ruthenium (Ru) and tin (Sn),
• alloys and oxides chosen from steels (alloy of iron and carbon), stainless steel, brass (alloy of copper and zinc), copper-nickel-zinc (alloy), bronze (alloy of copper and tin), tin-nickel (Sn-Ni), nickel-phosphorus (Ni-P), copper-beryllium (Cu-Be), palladium-nickel (Pd-Ni), copper-cobalt (Cu-Co) or alloys containing vanadium (V), chromium (Cr), manganese (Mn), zinc (Zn), tungsten (W), or zirconium (Zr), or an amorphous alloy, or ceramics such as e.g. zirconium oxides (ZrOx), titanium oxide (TiOx) or tantalum oxide (TaxOy).

6. The process according to any one of claims 1 to 5, **characterised in that** said phosphonic and amine compounds are dissolved in a solvent chosen from water, alcohol solvents, in particular C₁ to C₆ alcohols such as isopropanol, ethanol, methanol, aldehydes, ketones such as acetone, ethers such as diethyl ether or tetrahydrofuran, or alkanes, in particular C₁ to C₈ alkanes, as well as their mixtures, or also in a solvent composed of hydrotreated naphthas in mixture with isopropanol or acetone.

7. Use of a molecular functionalisation layer obtained according to the process of one of claims 1 to 6 for covering a surface intended to be used in a clock mechanism or in a device integrated into a watch product.

8. Use of a molecular functionalisation layer obtained according to the process of one of claims 1 to 6 for increasing the hydrophobicity and/or lipophobicity of a surface in order to promote the lubrication of the surface or to prevent the spreading of a lubricant, said surface being intended to be used in a clock mechanism or in a device integrated into a watch product.

9. Use of a molecular functionalisation layer obtained according to the process of one of claims 1 to 6 for covering a surface intended to be used in a clock mechanism or in a device integrated into a watch product, wherein the two compositions are applied in a sequential manner or simultaneously.

10. Use of a molecular functionalisation layer according to claim 8, in which the two compositions are applied in a sequential manner or simultaneously.

11. Use according to any one of claims 7 to 10, **characterised in that** said surfaces are formed to more than 50%, preferably to more than 75%, even more preferred to 85%, indeed even to more than 95%:
• of metals and oxides chosen from gold (Au), platinum (Pt), silver (Ag), palladium (Pd), rhodium (Rh), copper (Cu), iron (Fe), titanium (Ti), aluminium (Al), chromium (Cr), tantalum (Ta), aluminas, zirconias, ruby (alloy of aluminium oxide and chromium, n° CAS 12174-49-1), sapphire (aluminium oxide, n° CAS 1317-82-4), nickel (Ni), ruthenium (Ru) and tin (Sn),
• alloys and oxides chosen from steels (alloy of iron and carbon), stainless steel, brass (alloy of copper and zinc), copper-nickel-zinc (alloy), bronze (alloy of copper and tin), tin-nickel (Sn-Ni), nickel-phosphorus (Ni-P), copper-beryllium (Cu-Be), palladium-nickel (Pd-Ni), copper-cobalt (Cu-Co) or alloys containing vanadium (V), chromium (Cr), manganese (Mn), zinc (Zn), tungsten (W), or zirconium (Zr), or an amorphous alloy, or ceramics such as e.g. zirconium oxides (ZrOx), titanium oxide (TiOx) or tantalum oxide (TaxOy).

12. A functionalised surface obtained using the process of one of claims 1 to 6, wherein said surface is intended for use in a clock mechanism or in a device integrated into a watch product.

13. A functionalised surface obtained using the process of one of claims 1 to 6, **characterised in that** said surface is a contact surface of an escapement wheel with the pallet stones of the pallet of a clock escapement device, wherein said surface belongs to the escapement wheel and/or to the pallet stone.

14. A functionalised surface obtained using the process of one of claims 1 to 6, **characterised in that** said surface is a contact surface of an arbour and/or of a stone in which said arbour pivots.

## Claims (Claims for the following Contracting State(s): FR)

1. A process for coating a surface of a clock mechanism or a device integrated into a watch product with a molecular functionalisation layer, **characterised in that** it comprises at least the following steps:
a) optionally preparing said surface by washing in a solvent and/or in an aqueous detergent, then drying,
b) placing said surface in contact with a composition containing an effective quantity of phosphonic compounds until self-assembly of said phosphonic compounds to a fine layer on said surface,
c) placing said surface in contact with a composition containing an effective quantity of amine compounds until self-assembly of said amine compounds to a fine layer on said surface,
d) removing the supernatant,
e) rinsing the functionalised surface,
f) drying the functionalised surface,
wherein said phosphonic compounds and said amine compounds are different compounds and wherein:
either (A1)
said amine compound is a perfluorinated amine of the following formula (**I'-N**): 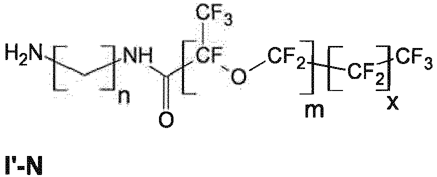
in which n is an integer in the range of between 1 and 100, m is an integer in the range of between 0 and 100 and x is an integer in the range of between 0 and 10,
and said phosphonic compound is a perfluorinated phosphonic compound of the following formula (**I'-P**): 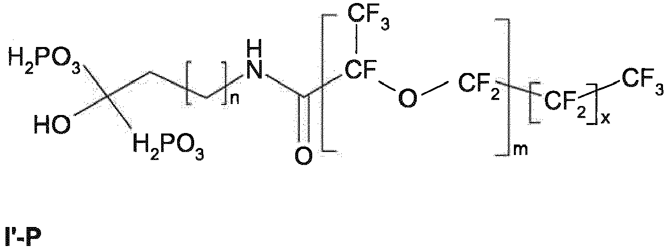 in which n is an integer in the range of between 1 and 100, m is an integer in the range of between 0 and 100 and x is an integer in the range of between 0 and 10;
or (A2)
said amine compound is a linear alkyl amine of the following formula (**I"-N**): 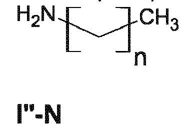
in which n is an integer in the range of between 1 and 100, preferably between 5 and 30, and even more preferred between 8 and 20;
and said phosphonic compound is a perfluorinated phosphonic compound of the following formulae (**I"-P**) and (**I"'-P**): 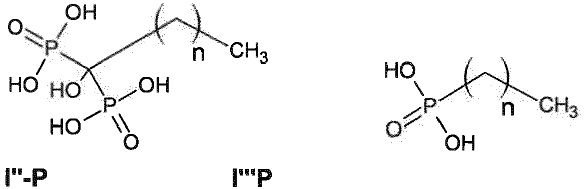 in which n is an integer in the range of between 1 and 100, preferably between 5 and 30 and even more preferred between 8 and 20.

2. The process according to claim 1, **characterised in that** steps b) and c) are carried out in succession, advantageously step b) first, then step c).

3. The process according to claim 1, **characterised in that** the amine and phosphonic compounds are contained in the same composition and steps b) and c) are combined in only one step.

4. The process according to any one of claims 1 to 3, **characterised in that** steps b) to f) are repeated for one, the other or both of the phosphonic and amine compounds.

5. The process according to any one of claims 1 to 4, in which said surface is formed to more than 50%:
• of metals and oxides chosen from gold (Au), platinum (Pt), palladium (Pd), silver (Ag), rhodium (Rh), copper (Cu), iron (Fe), titanium (Ti), aluminium (Al), chromium (Cr), tantalum (Ta), aluminas, zirconias, ruby (alloy of aluminium oxide and chromium, n° CAS 12174-49-1), sapphire (aluminium oxide, n° CAS 1317-82-4), nickel (Ni), ruthenium (Ru) and tin (Sn),
• alloys and oxides chosen from steels (alloy of iron and carbon), stainless steel, brass (alloy of copper and zinc), copper-nickel-zinc (alloy), bronze (alloy of copper and tin), tin-nickel (Sn-Ni), nickel-phosphorus (Ni-P), copper-beryllium (Cu-Be), palladium-nickel (Pd-Ni), copper-cobalt (Cu-Co) or alloys containing vanadium (V), chromium (Cr), manganese (Mn), zinc (Zn), tungsten (W), or zirconium (Zr), or an amorphous alloy, or ceramics such as e.g. zirconium oxides (ZrOx), titanium oxide (TiOx) or tantalum oxide (TaxOy).

6. The process according to any one of claims 1 to 5, **characterised in that** said phosphonic and amine compounds are dissolved in a solvent chosen from water, alcohol solvents, in particular C₁ to C₆ alcohols such as isopropanol, ethanol, methanol, aldehydes, ketones such as acetone, ethers such as diethyl ether or tetrahydrofuran, or alkanes, in particular C₁ to C₈ alkanes, as well as their mixtures, or also in a solvent composed of hydrotreated naphthas in mixture with isopropanol or acetone.

7. Use of a molecular functionalisation layer obtained according to the process of one of claims 1 to 6 for covering a surface used in a clock mechanism or in a device integrated into a watch product.

8. Use of a molecular functionalisation layer obtained according to the process of one of claims 1 to 6 for increasing the hydrophobicity and/or lipophobicity of a surface in order to promote the lubrication of the surface or to prevent the spreading of a lubricant, said surface being used in a clock mechanism or in a device integrated into a watch product.

9. Use of a molecular functionalisation layer obtained according to the process of one of claims 1 to 6 for covering a surface used in a clock mechanism or in a device integrated into a watch product, wherein the two compositions are applied in a sequential manner or simultaneously.

10. Use of a molecular functionalisation layer according to claim 8, in which the two compositions are applied in a sequential manner or simultaneously.

11. Use according to any one of claims 7 to 10, **characterised in that** said surfaces are formed to more than 50%, preferably to more than 75%, even more preferred to 85%, indeed even to more than 95%:
• of metals and oxides chosen from gold (Au), platinum (Pt), silver (Ag), palladium (Pd), rhodium (Rh), copper (Cu), iron (Fe), titanium (Ti), aluminium (Al), chromium (Cr), tantalum (Ta), aluminas, zirconias, ruby (alloy of aluminium oxide and chromium, n° CAS 12174-49-1), sapphire (aluminium oxide, n° CAS 1317-82-4), nickel (Ni), ruthenium (Ru) and tin (Sn),
• alloys and oxides chosen from steels (alloy of iron and carbon), stainless steel, brass (alloy of copper and zinc), copper-nickel-zinc (alloy), bronze (alloy of copper and tin), tin-nickel (Sn-Ni), nickel-phosphorus (Ni-P), copper-beryllium (Cu-Be), palladium-nickel (Pd-Ni), copper-cobalt (Cu-Co) or alloys containing vanadium (V), chromium (Cr), manganese (Mn), zinc (Zn), tungsten (W), or zirconium (Zr), or an amorphous alloy, or ceramics such as e.g. zirconium oxides (ZrOx), titanium oxide (TiOx) or tantalum oxide (TaxOy).

12. A functionalised surface obtained using the process of one of claims 1 to 6, wherein said surface is used in a clock mechanism or in a device integrated into a watch product.

13. A functionalised surface obtained using the process of one of claims 1 to 6, **characterised in that** said surface is a contact surface of an escapement wheel with the pallet stones of the pallet of a clock escapement device, wherein said surface belongs to the escapement wheel and/or to the pallet stone.

14. A functionalised surface obtained using the process of one of claims 1 to 6, **characterised in that** said surface is a contact surface of an arbour and/or of a stone in which said arbour pivots.
